(19) **Europäisches Patentamt / European Patent Office / Office européen des brevets**

(11) **EP 1 964 257 B1**

(12) **FASCICULE DE BREVET EUROPEEN**

(45) Date de publication et mention
de la délivrance du brevet:
**11.01.2012 Bulletin 2012/02**

(21) Numéro de dépôt: **06842156.9**

(22) Date de dépôt: **13.12.2006**

(51) Int Cl.:
***H02P 27/08*** (2006.01)

(86) Numéro de dépôt international:
**PCT/FR2006/051346**

(87) Numéro de publication internationale:
**WO 2007/074267 (05.07.2007 Gazette 2007/27)**

(54) **PROCEDE DE COMMANDE D'UN ONDULEUR DE TENSION POLYPHASE**

MEHRPHASEN-SPANNUNGSUMSETZER-STEUERVERFAHREN

POLYPHASE VOLTAGE CONVERTER CONTROL METHOD

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **22.12.2005 FR 0513142**

(43) Date de publication de la demande:
**03.09.2008 Bulletin 2008/36**

(73) Titulaire: **VALEO EQUIPEMENTS ELECTRIQUES
MOTEUR
94046 Créteil (FR)**

(72) Inventeurs:
• **VILAIN, Jean-Paul
F-60150 Melicocq (FR)**
• **HOBRAICHE, Julien
F-60200 Compiegne (FR)**

(56) Documents cités:
**EP-A- 0 911 950        WO-A-2004/036755
DE-A1- 19 931 199        US-A1- 2005 029 982**

## Description

### *Domaine de l'invention*

L'invention concerne un procédé de pilotage d'un pont de puissance destiné à commander une charge électrique comportant plusieurs phases, le pont de puissance étant destiné à être relié à la charge électrique via plusieurs bras, au moins un par phase, et étant destiné à être piloté par des fonctions de commutations, lesdites fonctions de commutation déterminant des vecteurs de commande pour commander la charge, lesdits vecteurs de commande se subdivisant en vecteurs de commande de roue libre et en vecteurs de commande actifs.

La présente invention trouve des applications particulièrement avantageuses, mais non exclusives, dans les domaines du secteur automobile, du secteur aéronautique.

Elle concerne aussi un dispositif mettant en oeuvre ledit procédé de pilotage du pont de puissance.

### *Etat de la technique*

Généralement, un pont de puissance de tension polyphasé est utilisé pour l'entraînement d'une charge électrique polyphasée. Ces charges électriques sont par exemple des machines réversibles telles que des alterno-démarreurs. Le pont est relié en amont à une source d'alimentation continue et raccordé en aval aux enroulements de phase de la charge polyphasée. Le pont de puissance est alimenté en énergie par la source d'alimentation continue en mode moteur, et par l'alterno-démarreur en mode alternateur.

Le pont de puissance comporte plusieurs bras de pont comportant, par exemple, chacun deux interrupteurs munis de diodes de roue libre. Ce type de pont est un pont deux niveaux. Le point milieu de chaque couple d'interrupteurs d'un même bras de pont est relié à un enroulement de phase de la charge. La logique de commande permet de commander les interrupteurs d'un même bras de pont.

Actuellement, on peut générer plusieurs combinaisons des interrupteurs des bras de pont auxquels on peut associer une représentation vectorielle des tensions de sortie de l'onduleur que l'on nommera des vecteurs de commande du pont de puissance. Ces vecteurs de commande sont composés de vecteurs actifs et de vecteurs de roue libre.

Dans l'état de la technique, on connait différents types de techniques de pilotage d'un onduleur polyphasé, parmi lesquels on trouve le document "A.M. Hava, R.J. Kerkman, et T.A. Lipo. A high performance generalized discontinuous pwm algorithm. IEEE Trans. on Industry Applications, Vol.34(N˚5), Septembre/Octobre 1998." Ce document décrit des techniques de pilotage, qui utilisent notamment des stratégies de modulation de largeur d'impulsions discontinues, pilotant d'une part la partie aval du pont de puissance et d'autre part le pont lui même.

Ces techniques de pilotage bloquent tour à tour un des bras de pont du pont de puissance sur une période électrique. Pour cela, en fonction de la stratégie de modulation de largeur d'impulsions employée, une quantité de neutre est déterminée pour chaque déphasage tension-courant d'une phase de la charge. Pour chaque phase de la charge, une modulante est déterminée et translatée par ajout d'une quantité de neutre. Avec ces techniques de pilotage, un bras de pont est bloqué lorsque sa modulante est saturée à +1 ou -1.

De telles techniques de pilotage présentent des inconvénients. En effet, il n'est pas possible de déterminer la quantité de neutre à ajouter aux modulantes, lorsque le système n'est pas en régime permanent. En outre, en régime permanent, cette quantité de neutre est soit calculée en ligne, ce qui nécessite un temps de calcul assez long, soit tabulée ce qui entraîne une consommation importante de mémoire.

De plus, pour ces techniques de pilotage de l'état de la technique cité, la connaissance du déphasage tension-courant de la charge polyphasée est nécessaire. Or, le calcul ou la mesure de ce déphasage est très complexe à mettre en oeuvre.

De même, l'implantation numérique de ces techniques pose des problèmes de réalisation. En effet, lors de leur implantation il faut prendre en compte d'une part les nombreux points de fonctionnement de la charge polyphasée (par exemple, moteur, alternateur, démarreur à différentes vitesse et couple d'un alterno-démarreur) pour appliquer une quantité de neutre optimale correspondante ; et d'autre part des stratégies différentes correspondant à chaque quantité de neutre appliquée. L'algorithme permettant de réaliser l'implantation numérique est ainsi long et fastidieux à mettre en oeuvre.

Par ailleurs, actuellement selon le document « Folker Renken. Analytical Calculation of the DC-Link Capacitor Current for Pulsed Three-Phase Inverters. Proceedings of E.P.E. Power Electronics and Motion Control, Riga, Latvia, 2004 », pour stabiliser la tension en côté amont du pont de puissance, ledit pont comporte en amont un condensateur de découplage. Ce condensateur de découplage permet de filtrer le courant d'entrée du pont de puissance, courant qui subit de fortes discontinuités. Ce condensateur de découplage a une forte capacité pour maintenir constante la tension d'entrée du pont de puissance et pour éviter des effets d'oscillations. La taille physique du condensateur de découplage est très importante. Aussi, un tel condensateur de découplage pose des problèmes d'encombrement pour des applications dans un espace restreint.

Le courant efficace dans le condensateur de découplage représente l'ondulation du courant de source autour de sa valeur moyenne. Dans l'état de la technique on observe que, le courant de source fait souvent des bonds autour de la valeur zéro provoquant ainsi des ondulations importantes. Par EP0911950A il est également connu un convertisseur d'attaque pour moteur de forte puissance comprenant un étage de conversion de puissance sur trois niveaux de sortie de type à verrouillage par le neutre (dit NPC pour « Neutral Point Clamped » en anglais) et un banc de condensateurs à courant continu montés en série qui est couplé en parallèle avec l'étage de conversion de puissance NPC. Le convertisseur comporte également un contrôleur qui sélectionne des états de commutation de l'étage de conversion de puissance NPC et qui commande un équilibrage de tension de neutre du banc de condensateurs au moyen d'une modulation vectorielle et de calculs prédictifs de charge.

### Exposé de l'invention

L'invention a pour but de remédier aux inconvénients des techniques exposées précédemment. Pour cela, l'invention propose de modifier les techniques de pilotage de l'onduleur existantes dans le but de minimiser les pertes par commutation dans les bras de pont du pont de puissance, de réduire le courant efficace dans la capacité de filtrage et par conséquent de stabiliser la tension en amont du pont de puissance tout en conservant le pilotage de la charge polyphasée en aval du pont de puissance. Selon un premier aspect, l'invention porte sur un procédé de pilotage d'un pont de puissance tel que défini dans le revendication 1 ci-annéxée. Conformément à l'invention, une méthode de production de fonctions de commutations comporte une étape de comparaison de modulantes translatées d'une quantité de neutre avec une porteuse, une modulante étant associée à chaque bras de pont, ladite comparaison définissant des fonctions de commutation pour piloter ledit pont. Ainsi, une méthode de comparaison de modulantes translatées avec une porteuse permet de définir facilement et rapidement l'évolution des fonctions de commutation qui piloteront l'onduleur. C'est de plus une méthode qui peut être utilisée sur les processeurs de signaux dédiés au contrôle machine électrique.
Selon des modes de réalisation non limitatifs, le procédé selon l'invention comporte les caractéristiques supplémentaires suivantes :

- La sélection d'une méthode de production de fonctions de commutations est basée sur un positionnement d'un vecteur tension de consigne dans une zone d'un domaine du plan défini par des vecteurs de commande, le vecteur tension de consigne étant déterminé à partir de consignes de tension scalaires. Ainsi, en divisant l'hexagone en plusieurs sous parties, on choisit toujours une méthode optimale parmi les deux précédentes tout en assurant une génération en moyenne du vecteur tension de consigne nécessaire au bon pilotage de la charge électrique en aval.

- Le domaine du plan est divisé en une première et une deuxième zones et en ce que la première méthode de production de fonctions de commutations est sélectionnée si le vecteur tension de consigne est positionné dans la première zone, et en ce que la deuxième méthode de production de fonctions de commutations est sélectionnée si le vecteur tension de consigne est positionné dans la deuxième zone. Ainsi, en ne divisant l'hexagone qu'en deux parties la localisation du vecteur tension de consigne dans les zones est simple.

- Le domaine du plan est divisé en une première, une deuxième et une troisième zones et en ce que la première méthode de production de fonctions de commutations est sélectionnée si le vecteur tension de consigne est positionné dans la première zone. Ainsi, en divisant en trois l'hexagone, la détection de la zone dans laquelle se trouve le vecteur tension de consigne est légèrement plus complexe mais la réduction des pertes par commutation est plus importante.

- Le domaine du plan est divisé en une première, une deuxième et une troisième zones et en ce que la deuxième méthode de production de fonctions de commutations est sélectionnée si le vecteur tension de consigne est positionné dans la deuxième zone ou troisième zone.

- La méthode de production de fonctions de commutations est la première méthode de production de fonctions de commutations et la porteuse est une simple porteuse. Ainsi, la simple porteuse est simple à mettre en oeuvre et en général, elle est présente de manière native dans les processeurs dédiés contrôle machine électrique.

- La méthode de production de fonctions de commutations est la deuxième méthode de production de fonctions de commutations et la porteuse est une double porteuse. Ainsi, la double porteuse permet de changer le triangle de décomposition du vecteur tension de consigne et peut, dans certaines zones de l'hexagone, conduire à la non utilisation des vecteurs de roue libre. La conséquence directe est la réduction de l'ondulation du courant de source autour de sa valeur moyenne et par conséquent la réduction du courant efficace dans le condensateur de découplage.

- Une double porteuse comporte deux simples porteuses et en ce qu'au moins une modulante est comparé à une seule des porteuses de la double porteuse.

- Une simple porteuse est un triangle isocèle comportant un sommet se trouvant à une valeur maximale et une base se trouvant à une valeur minimale. Ainsi, une forme d'onde de type porteuse triangulaire isocèle garantit le centrage des impulsions de commande autour de la demi période de découpage ce qui est connu pour diminuer le taux de distorsion harmonique des courants de phase dans la charge.

- La détermination d'une modulante est effectuée selon une stratégie intersective. Ainsi, le calcul des modulantes par une stratégie de type intersective est le plus naturel car il y a alors une relation simple, facilement réalisable sur un processeur de signaux.

- La détermination d'une modulante est effectuée selon une stratégie barycentrique. Bon nombre de variateurs actuels calculent déjà les modulantes de cette manière. On peut alors naturellement et rapidement adapter le procédé à ce qui existe dans la logique de commande existante.

- Une méthode de production de fonctions de commutations comprend en outre une étape de bloquer un bras de pont pendant toute une période de découpage du pont de puissance. Ainsi, le blocage d'un bras de pont permet de gagner les pertes par commutation induite dans celui-ci s'il avait été amené à commuter au cours de la période de découpage. En choisissant, dans certaines zones, le bras de pont blocable dans lequel le courant est maximum en valeur absolue on effectue un choix optimal permettant d'avoir d'un gain maximal en terme de pertes par commutation.

- Le domaine du plan est défini dans un repère statorique, ledit repère statorique étant subdivisé en secteurs angulaires et en ce qu'une méthode de production de fonctions de commutations comporte en outre une étape de déterminer un bras de pont à bloquer dans un état haut ou un état bas en fonction de la position du vecteur tension de consigne dans un des secteurs angulaires.

- Ainsi,

  - si le vecteur tension de consigne est dans un premier secteur angulaire alors le premier bras est bloqué à l'état haut,
  - si le vecteur tension de consigne est dans un deuxième secteur angulaire alors le troisième bras est bloqué à l'état bas,
  - si le vecteur tension de consigne est dans un troisième secteur angulaire alors le deuxième bras est bloqué à l'état haut,
  - si le vecteur tension de consigne est dans un quatrième secteur angulaire alors lé premier bras est bloqué à l'état bas,
  - si le vecteur tension de consigne est dans un cinquième secteur angulaire alors le troisième bras est bloqué à l'état haut,
  - si le vecteur tension de consigne est dans un sixième secteur angulaire alors le deuxième bras est bloqué à l'état bas.

- La deuxième zone détermine des triangles intérieurs et en ce qu'une méthode de production de fonctions de commutation comporte en outre une étape de déterminer un bras à bloquer dans un état haut ou un état bas en fonction de la position du vecteur tension de consigne dans un des triangles intérieurs.

- Ainsi

  - si le vecteur tension de consigne est dans un premier triangle intérieur alors le premier bras est bloqué à l'état haut,
  - si le vecteur tension de consigne est dans un deuxième triangle intérieur alors le troisième bras est bloqué à l'état bas,
  - si le vecteur tension de consigne est dans un troisième triangle intérieur alors le deuxième bras est bloqué à l'état haut,
  - si le vecteur tension de consigne est dans un quatrième triangle intérieur alors le premier bras est bloqué à l'état bas,
  - si le vecteur tension de consigne est dans un cinquième triangle intérieur alors le troisième bras est bloqué à l'état haut,

- si le vecteur tension de consigne est dans un sixième triangle intérieur alors le deuxième bras est bloqué à l'état bas.

- Une méthode de production de fonctions de commutations comporte en outre une étape de sélectionner au moins deux bras de pont susceptibles d'être bloqués en fonction d'une relation d'ordre. Ainsi, on a le choix entre deux bras de pont à bloquer et on pourra également utiliser un système à double porteuse pour diminuer le courant efficace dans le condensateur de découplage.

- La relation d'ordre est une comparaison entre les modulantes associées aux bras de pont.

- Les bras de pont sélectionnés correspondent aux bras de pont ayant la modulante la plus importante et la modulante la moins importante.

- Le bras de pont à bloquer est choisi parmi les bras de pont sélectionnés et est celui qui comporte un courant de phase le plus important en valeur absolue parmi des courants de phase correspondant respectivement à une plus grande des modulantes et une plus petite des modulantes parmi les modulantes associées aux bras de pont. Ainsi, l'établissement d'une relation d'ordre entre les modulantes et les comparaisons de courants en valeur absolue sont des calculs élémentaires simples à mettre en oeuvre sur un processeur de signaux ils permettent en fait de déterminer avec exactitude le bras de pont optimal à bloquer pour économiser le maximum de pertes par commutation.

- Si le bras de pont à bloqueur est celui correspondant à la plus grande des modulantes, alors le bras de pont est bloqué à l'état haut, et si le bras de pont à bloquer est celui correspondant à la plus petite des modulantes, alors le bras de pont est bloqué à l'état bas.

- Une méthode de production de fonctions de commutation comporte en outre une étape de déterminer une quantité de neutre à ajouter à une modulante en fonction d'un état haut ou bas d'un bras de pont à bloquer.

- Ainsi,

- si un bras doit être bloqué à l'état haut alors la quantité de neutre est égale à une première valeur maximale moins la modulante associée audit bras, et
- si le bras doit être bloqué à l'état bas alors la quantité de neutre est égale à une deuxième valeur minimale moins la modulante associée audit bras.
- Selon un second aspect, l'invention porte sur un dispositif de pilotage d'un pont de puissance tel que défini dans le revendication 24 et-annexée.

### Brève description des dessins

L'invention sera mieux comprise à la lecture de la description qui suit et à l'examen des figures qui l'accompagnent. Celles-ci sont présentées à titre indicatif et nullement limitatif de l'invention. Les figures montrent :

Figure 1a : Une illustration de moyens mettant en oeuvre le procédé, selon l'invention,
Figure 1b : une représentation d'un repère statorique utilisé dans le procédé de la Fig. 1a,
Figure 2a : Une illustration des étapes, dans un premier mode de réalisation, du procédé selon l'invention,
Figure 2b : une représentation d'un repère statorique utilisé dans le premier mode de réalisation de la Fig. 2a,
Fig. 2c : une représentation d'une position vectorielle d'un vecteur tension de consigne utilisé lors d'une étape du premier mode de réalisation de la Fig. 2a,
Figure 3a : Une illustration des étapes, dans un second mode de réalisation, du procédé selon l'invention,
Figure 3b : une représentation d'un repère statorique utilisé dans le second mode de réalisation de la Fig. 3a,
Figure 4 : Une illustration de la comparaison entre les modulantes et une simple porteuse de forme triangulaire, selon le procédé de l'invention, et
Figure 5 : Une illustration de la comparaison entre les modulante et une double porteuse de forme triangulaire, selon le procédé de l'invention.

### Description détaillée de modes de réalisation de l'invention

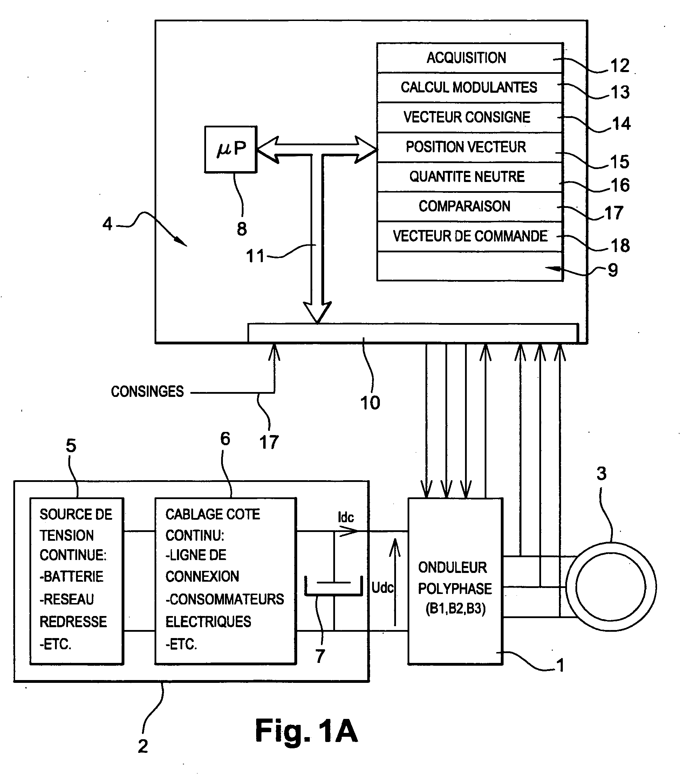

La Fig. 1a montre un pont de puissance polyphasé 1 relié en amont à un bus continu 2, en aval à une charge

**EP 1 964 257 B1**

3 polyphasée et commandée par des vecteurs de commande produits par une logique de commande 4. Le pont de puissance 1 est un dispositif électrique qui est destiné à convertir une tension continue en plusieurs tensions sinusoïdales, une par phase lorsque la charge associée fonctionne en mode moteur. Il est alors appelé onduleur. En mode alternateur (générateur), le pont de puissance convertit des tensions phases sinusoïdales en tension continue pour alimenter un consommateur tel qu'une batterie. Il est alors appelé pont redresseur commandé. Le pont de puissance 1 comporte plusieurs bras de pont (non représentés). Chaque bras de pont est constitué de plusieurs interrupteurs INT commandables électroniquement.

Autrement dit, L'onduleur est un convertisseur continu-alternatif. Du coté alternatif on place une charge polyphasée. Du coté continu se trouve le bus continu. Il faut fournir de l'énergie à la charge polyphasée, elle doit venir du bus continu (mode moteur). En mode alternateur, c'est la charge polyphasée qui fournit de l'énergie au bus continu. La charge polyphasée est donc une source d'énergie réversible dont une caractéristique est une tension continue à ses bornes.

Pour le reste de la description, on prend comme exemple non limitatif un pont de puissance triphasé deux niveaux, sachant qu'il peut être remplacé par d'autres types de ponts de puissance existants tel que dans un exemple non limitatif un onduleur triphasé trois niveaux, celui ayant alors trois vecteurs de roue libre disponibles.

Dans le reste de la description, on se place dans le cas où le pont de puissance est un onduleur. Bien entendu tout ce qui est décrit dans la suite de la description pour l'ondûleur s'applique également à un pont redresseur à la différence près entre un onduleur et un pont redresseur qui vient d'être cité précédemment.

L'onduleur 1 est alors un onduleur triphasé pilotant la charge 3. Il comporte donc trois bras de pont B1, B2, et B3. Chaque bras de pont comporte dans un exemple non limitatif deux interrupteurs INT bidirectionnels en courant munis de diodes de roue libre. Par exemple, le premier bras comporte les interrupteurs haut INT11, et bas INT12, le deuxième bras, les interrupteurs haut INT21, et bas INT22, et le troisième bras les interrupteurs haut INT31, et bas INT32.

Le bus continu 2 comporte une source de tension continue 5. Cette source de tension continue 5 est, dans un exemple préféré, une batterie ou un réseau redressé. Cette source de tension 5 alimenté l'onduleur 1. Dans l'exemple de la Fig. 1a, des dispositifs 6 qui sont notamment des lignes de connexions et/ou des consommateurs électriques sont branchés en série et/ou en parallèle à la source de tension 5. Ces consommateurs électriques peuvent être entre autres, dans le cas d'un véhicule automobile, des phares, une radio, une climatisation, la liste n'est pas exhaustive.

Le bus continu 2 comporte également un condensateur de découplage 7 branché parallèlement à la source de tension 5. Ce condensateur 7 est situé de préférence au plus près de l'onduleur 1. Cela permet de diminuer l'inductance de ligne entre le condensateur et les interrupteurs. Ainsi, on évite d'augmenter les surtensions au moment des commutations des interrupteurs et donc de casser lesdits interrupteurs.

Le condensateur 7 est de préférence de faible capacité. Comme on le verra en détail plus loin dans la description, cela est due à une stratégie double porteuse. La capacité du condensateur 7 est de préférence diminuée de 25% par rapport aux capacités des condensateurs de découplage de l'état de la technique. Dans un mode de réalisation non limitatif, la capacité du condensateur 7 est de l'ordre de 500 microfarads pour une inductance parasite de la ligne de connexion de l'ordre de 10 microHenrys et pour une batterie 36 Volts, 18 milliOhms. Le courant dans le condensateur 7 représente la partie ondulatoire du courant de source: Le condensateur 7 à pour rôle de filtrer le courant de source entrant dans l'onduleur 1. Cela permet à la source de tension 5 de ne délivrer que la valeur moyenne dudit courant de source à l'onduleur 1. Ainsi, du fait de la faible capacité du condensateur ainsi obtenue, il n'est pas nécessaire d'utiliser des condensateurs à forte capacité volumique tels que des condensateurs électrochimiques qui représentent un manque de fiabilité notamment dans un environnement à forte température ou humide. De plus, cela évite ainsi d'utiliser des condensateurs à technologie onéreuse.

L'équipement combinant le bus continu 2 et l'onduleur 1 est destiné à fournir l'énergie nécessaire au fonctionnement de la charge 3. L'onduleur 1 est utilisé pour l'entraînement de la charge 3. La charge 3 peut être dans des exemples non limitatifs un moteur asynchrone, synchrone, etc. Le point milieu de chaque couple d'interrupteurs d'un même bras de pont de l'onduleur 1 est relié à une phase de la charge 3.

Comme on le verra en détail plus loin, l'onduleur 1 est piloté en modulation de largeur d'impulsions, couramment appelé MLI ou encore PWM en anglais « Pulse Width Modulation »), par la logique de commande 4. Ce type de commande permet d'avoir une alimentation en tension à fréquence variable et niveau de tension variable. On peut donc adapter pour chaque condition particulière de fonctionnement de la charge électrique (par exemple si en mode alternateur, on doit fournir une certaine puissance pour alimenter des consommateurs, on aura besoin d'un vecteur tension de norme donnée, et tournant à une vitesse donnée), la valeur des courants dans la charge ainsi que leurs fréquences. Par conséquent le pilotage en MLI permet de piloter la charge avec précision.

Pour piloter un onduleur polyphasé, la logique de commande 4 définit l'état ouvert ou fermé de l'ensemble des interrupteurs de l'onduleur 1. De façon non limitative, la logique de commande 4 permet de commander de manière complémentaire les interrupteurs d'un même bras de pont. Cela permet d'éviter de mettre en court-circuit la source d'alimentation.

L'antagonisme de commande des interrupteurs d'un même bras de pont et le nombre fini d'interrupteurs fait que le nombre de configurations possibles des interrupteurs des bras de pont est fini.

Pour l'onduleur 1 triphasé deux niveaux, on peut générer huit configurations différentes des interrupteurs des bras de pont. A chacune de ces huit configurations, on peut associer une représentation vectorielle des tensions de sortie de l'onduleur que l'on nommera des vecteurs de commande de l'onduleur. Ces vecteurs de commande sont également appelés vecteur de sortie de l'onduleur.

Le vecteur de commande est une représentation mathématique qui traduit la résultante des tensions réelles appliquées sur la charge 3. Parmi ces configurations, six sont des états actifs $\vec{V}1$ à $\vec{V}6$ correspondant à une amplitude du vecteur de commande fixe et se distinguent par la phase et deux $\vec{V}0$ et $\vec{V}7$ sont des états dits de "roue libre" pour lesquels l'amplitude du vecteur de commande est nulle et sa phase ($\varphi$=arc tangente y/x) n'est pas définie. On notera que la phase des vecteurs actifs est définie comme étant l'angle orienté entre l'axe alpha d'un repère statorique (définit en détail plus loin) et le vecteur actif correspondant. Ainsi, pour $\vec{V}1$, la phase vaut 0, la phase de $\vec{V}2$ vaut 60˚, etc.

Dans un mode de réalisation non limitatif, un vecteur de commande produit par la logique de commande 4 comporte autant de fonctions de commutation SC que la charge 3 comporte de phases. Dans le cas de l'exemple pris d'un onduleur triphasé deux niveaux, commandé en complémentaire, on a trois fonctions de commutation SC pour un vecteur de commande.

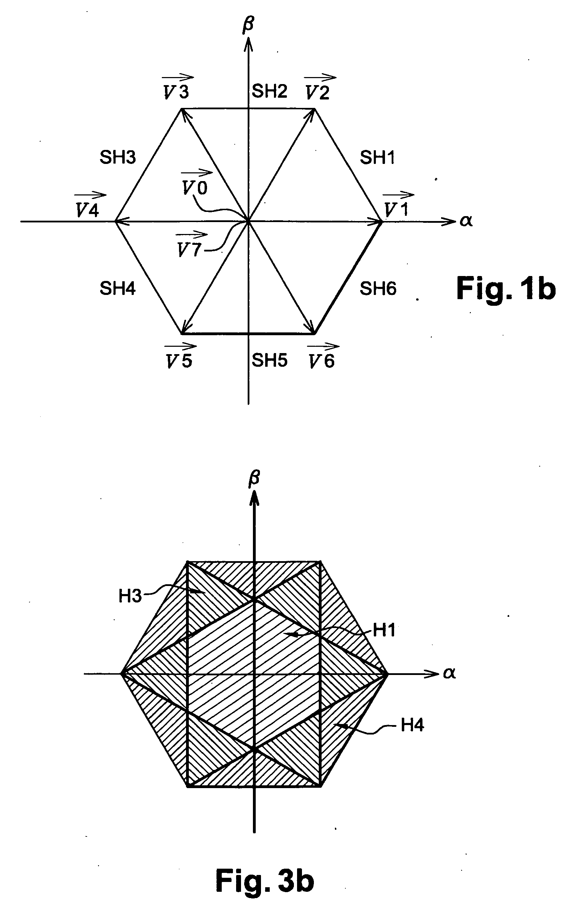

Les vecteurs de commande produits par la logique de commande 4 peuvent être représentés dans un repère statorique illustré à la Fig. 1 b. Le repère statorique est un repère d'axe ($\alpha$, $\beta$) fixes liés au stator. L'axe $\alpha$ est horizontale et l'axe $\beta$ est verticale. L'axe $\alpha$ est à 90 degrés de l'axe $\beta$. Dans un exemple préféré, le vecteur de commande $\vec{V}1$ se situe sur l'axe $\alpha$. L'extrémité des vecteurs de commande actifs $\vec{V}1$ à $\vec{V}6$ forment un hexagone. Le centre de l'hexagone est relié à chacun de ses sommets par un vecteur de commande actif. Dans un mode de réalisation non limitatif, les vecteurs de commande actifs $\vec{V}1$ à $\vec{V}6$ sont à 60 degrés les uns des autres. Ainsi, l'hexagone est décomposé en six secteurs actifs SH, chaque secteur actif étant formé par deux vecteurs actifs adjacents et a son centre au centre de l'hexagone.

Dans un exemple, le premier secteur SH1 est représenté par les vecteurs de commande $\vec{V}1$ et $\vec{V}2$ ainsi de suite jusqu'au sixième secteur SH6 qui est représenté par les vecteurs de commande $\vec{V}6$ et $\vec{V}1$, chacun des vecteurs comportant trois fonctions de commutation SC dans l'exemple pris.

Les vecteurs de commande de roue libre $\vec{V}0$ et $\vec{V}7$, ayant une amplitude nulle, se situent à l'intersection de l'axe $\alpha$ et de l'axe $\beta$. L'intersection de l'axe a et de l'axe $\beta$ est le centre du repère statorique qui est également le centre de l'hexagone.

Ainsi, dans un exemple, les fonctions de commutation SC desdits vecteurs sont représentées dans le tableau suivant. On a une correspondance entre les combinaisons des fonctions de commutation SC et les vecteurs de commande associés.

| Vecteur | SC1 | SC2 | SC3 |
|---------|-----|-----|-----|
| $\vec{V}0$ | 0 | 0 | 0 |
| $\vec{V}1$ | 1 | 0 | 0 |
| $\vec{V}2$ | 1 | 1 | 0 |
| $\vec{V}3$ | 0 | 1 | 0 |
| $\vec{V}4$ | 0 | 1 | 1 |
| $\vec{V}5$ | 0 | 0 | 1 |
| $\vec{V}6$ | 1 | 0 | 1 |
| $\vec{V}7$ | 1 | 1 | 1 |

Avec « 0 » correspondant à une commande de fermeture de l'interrupteur bas d'un bras de pont et à une commande d'ouverture de l'interrupteur haut du même bras de pont ; et « 1 » correspondant à une commande d'ouverture de l'interrupteur bas d'un bras de pont et à une commande de fermeture de l'interrupteur haut du même bras de pont.

Par exemple, si SC1 = 1, SC2 = 0 et SC3 = 0 ; l'interrupteur haut INT11 du premier bras B1 est fermé, l'interrupteur bas INT12 du premier bras B1 est ouvert, l'interrupteur haut INT21 du deuxième bras B2 est ouvert, l'interrupteur bas INT22 du deuxième bras B2 est fermé, et enfin l'interrupteur haut INT31 du troisième bras B3 est ouvert et l'interrupteur bas INT32 du troisième bras est fermé.

La logique de commande 4, permettant de commander les interrupteurs de l'onduleur, est, souvent réalisée sous forme de circuit intégré. Dans un exemple, Fig. 1a, cette logique de commande 4 comporte :

- un microprocesseur 8,
- une mémoire 9 de programme,
- et une interface 10 d'entrée sortie, le microprocesseur 8, la mémoire 9 et l'interface 10 d'entrée sortie étant interconnectés par un bus 11.

Dans la pratique, lorsque l'on prête une action à un dispositif, celle-ci est réalisée par un microprocesseur du dispositif commandé par des codes instructions enregistrés dans une mémoire de programme du dispositif. La logique de commande 4 est un tel dispositif.

La mémoire 9 de programme est divisée en plusieurs zones, chaque zone correspondant à des codes instructions pour réaliser une fonction du dispositif. La mémoire 9 comporte ainsi :

- une zone 12 comportant des codes instructions pour la mise en oeuvre de l'acquisition des consignes de tension scalaires,
- une zone 13 comportant des codes instructions pour réaliser un calcul de modulantes en fonction de la stratégie choisie (barycentrique ou intersective), comme on va le voir en détail plus loin,
- une zone 14 comportant des codes instructions pour déterminer un vecteur tension de consigne $\vec{V}^*$ en fonction de consignes de tension scalaires V1*, V2*, V3* qui sont les tensions que l'on souhaite appliquer à la charge 3,
- une zone 15 comportant des codes instructions pour déterminer la position vectorielle du vecteur tension de consigne $\vec{V}^*$ dans l'hexagone formé par les vecteurs de commandes actifs,
- une zone 16 comportant des codes instructions pour déterminer une quantité de neutre,
- une zone 17 comportant des codes instructions pour réaliser une comparaison entre une porteuse ou une double porteuse, une porteuse permettant de générer des impulsions de largeur variable en fonction d'une ou plusieurs modulantes et les modulantes translatées de la quantité de neutre déterminée, et
- une zone 18 comportant des codes instructions pour réaliser une élection de vecteurs de commande $\vec{V}0$ à $\vec{V}7$ à partir de cette comparaison et une application desdits vecteurs de commande à l'onduleur 1.

Par ailleurs, en plus de la décomposition en secteurs actifs SH comme vu précédemment, l'hexagone est subdivisé en N zones, N étant un nombre entier. Comme on va le voir en détail ci-après, afin d'éliminer au maximum l'utilisation des vecteurs de roue libre, on décompose le vecteur tension de consigne $\vec{V}^*$ dans les zones appropriées. On choisit de manière simplifiée une succession de vecteurs de commande pilotant l'onduleur 1 tout en réduisant les pertes par commutation dans ce dernier et également en réduisant le courant efficace dans le condensateur de découplage 7 ainsi que les ondulations de la source de tension.

### Décomposition de l'hexagone en 2 zones-(N = 2)

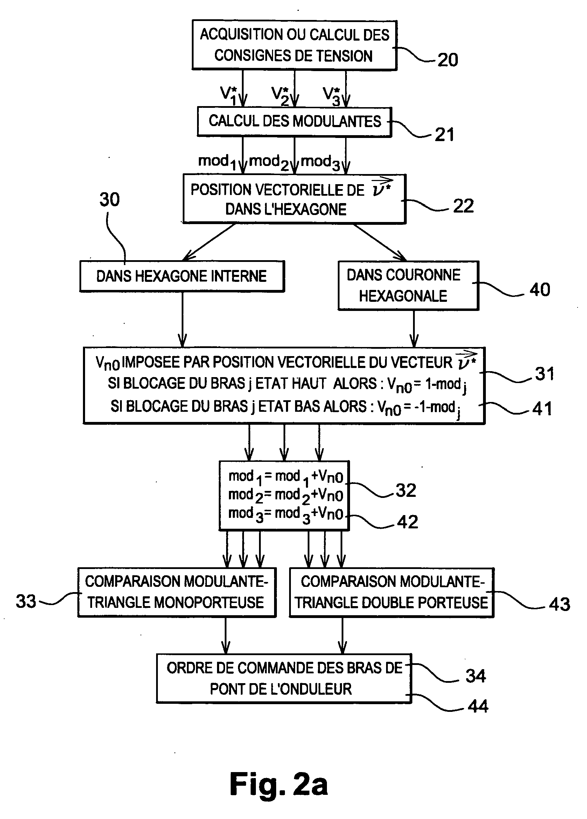

La Fig. 2a montre un procédé de fonctionnement des moyens illustrés à la Fig. 1a, lorsque N = 2. Dans ce cas, l'hexagone comporte :

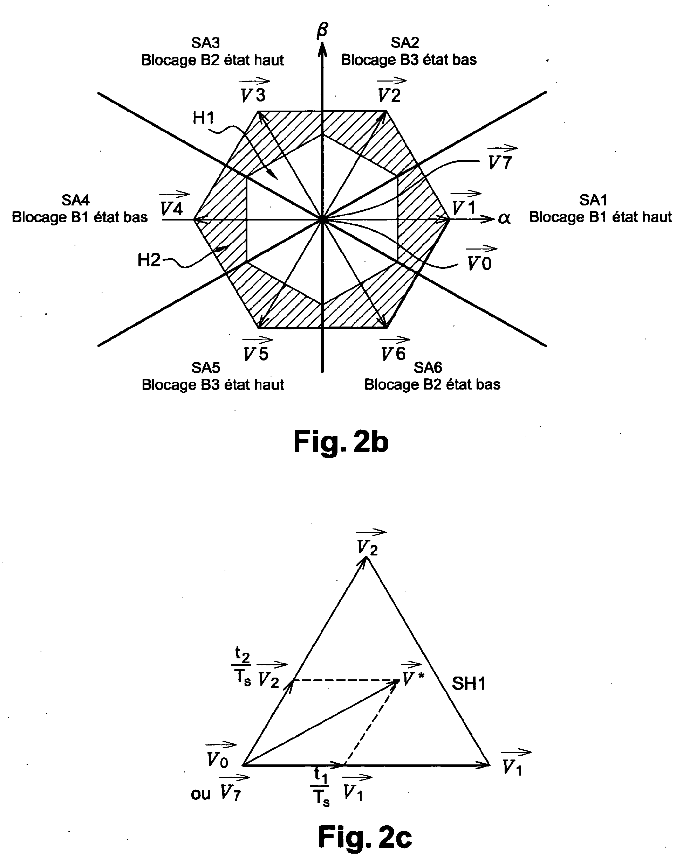

- une première zone qui est un hexagone interne H1 ou encore zone interne hexagonale, et
- une deuxième zone qui est une couronne hexagonale H2 entourant la première zone hexagone interne tel qu'illustré à la Fig. 2b ou encore zone couronne hexagonale.

Par ailleurs, le repère statorique peut être subdivisé en secteurs angulaires SA. Chaque secteur angulaire a son sommet au centre du repère statorique et fait un angle de 60˚. Chacun des vecteurs de commande actifs coupent en deux parties égales chacun des secteurs angulaires. Le repère statorique comporte six secteurs angulaires SA. Le premier secteur angulaire SA1 est coupé en deux parties égales par le vecteur de commande $\vec{V}1$ ainsi de suite jusqu'au sixième secteur angulaire SA6 qui est coupé par le vecteur de commande $\vec{V}6$.

Le procédé pour déterminer les ordres de commande de l'onduleur lorsque N=2 s'effectue de la manière suivante comme illustré à la Fig. 2a.

**Dans une première étape 20**), la logique de commande 4 acquiert les trois consignes de tensions scalaires V1*, V2* et V3* de chacun des trois bras de l'onduleur B1, B2, B3. Ces trois consignes de tensions scalaires V1*, V2* et V3* sont les tensions à appliquer à la charge 3. Ces trois consignes de tensions scalaires V1*, V2* et V3* peuvent être mesurées ou calculées par la logique de commande 4.

Ces consignes peuvent ainsi être calculées en interne par la logique de commande (gestion par exemple de la boucle de régulation des courants de phase de la charge dans la logique de commande). On peut également avoir une logique de commande de supervision qui fournit les tensions de consigne à la logique de commande 4 par le biais d'une liaison série, parallèle ou CAN. Il faudra alors que la logique de commande 4 mesure les informations fournies par le superviseur.

**Dans une deuxième étape 21**), la logique de commande 4 détermine pour chaque bras de pont de l'onduleur 1, une modulante correspondante mod1, mod2 et mod3. La logique de commande 4 peut déterminer les modulantes des trois bras de pont de plusieurs manières (stratégie intersective ou stratégie barycentrique non limitatives) comme on va le voir en détail ci-après, lesdites modulantes étant fonction des consignes de tension scalaires. On notera qu'une modulante représente une valeur normalisée par rapport à la tension de bus continu de la consigne de tension scalaire d'un bras de pont de l'onduleur. L'intersection modulante-triangle va fournir les ordres de commande en MLI du bras de pont comme on va le voir en détail plus loin.

Stratégie intersective

Dans un premier mode de réalisation non limitatif, la logique de commande peut calculer les modulantes selon une stratégie intersective. Dans ce cas, La logique de commande 4 mesure ou estime la tension du bus continu $U_{DC}$, de préférence près de l'onduleur 1 pour obtenir la tension réelle disponible aux bornes dudit onduleur 1. La logique de commande 4 détermine la modulante de chaque phase de la charge 3. La modulante est associée à chaque bras de pont. Cette modulante est dans un exemple non limitatif une valeur normalisée d'une consigne de tension scalaire par rapport à la tension de source $U_{DC}$. Ainsi, pour chacune des trois consignes de tensions scalaires V1*, V2* et V3*, la logique de commande 4 détermine respectivement les trois modulantes mod1, mod2 et mod3.
Ainsi, la normalisation s'effectue de la manière suivante :

$$\mathrm{mod} = \frac{Max - Min}{U_{DC}} V^* + Min$$

Max étant la valeur la plus élevée atteinte par une porteuse triangulaire qui va être définie par la suite.
Min étant la valeur la plus faible atteinte par la porteuse triangulaire.
Ce qui donne avec une valeur Min = -1 et Max = 1 :

$$\mathrm{mod} = \frac{2.V^*}{U_{DC}} - 1$$

Ainsi,

$$\mathrm{mod}1 = \frac{2.V1^*}{U_{DC}} - 1$$

$$\mathrm{mod}2 = \frac{2.V2^*}{U_{DC}} - 1$$

$$\mathrm{mod}3 = \frac{2.V3^*}{U_{DC}} - 1$$

Ainsi dans ce cas, la tension Vs appliquée en sortie d'un bras de pont est égale à la commande du bras de pont multiplié par la tension continue $U_{DC}$.
Ainsi, pour chacune des trois consignes de tensions scalaires V1*, V2* et V3*, la logique de commande 4 détermine respectivement les trois modulantes mod1, mod2 et mod3.

Stratégie barycentrique

Dans un deuxième mode de réalisation non limitatif, la logique de commande 4 peut déterminer les modulantes mod1, mod2 et mod3 selon une stratégie barycentrique. Selon cette stratégie, on utilise deux vecteurs de commande actifs et les deux vecteurs de roue libre sur une période de commande de l'onduleur 1 pour décomposer le vecteur tension de consigne $\vec{V}^*$. Pour ce faire, la logique de commande 4 applique d'abord l'étape 22, avant de déterminer les trois modulantes mod1, mod2 et mod3 à l'étape 21. On notera que la période de commande de l'onduleur représente l'intervalle de temps où l'on va commander une ouverture et une fermeture de l'interrupteur haut du bras de pont (la commande de l'interrupteur est complémentaire). On parle également de période de découpage.

Premièrement, la logique de commande 4 détermine à partir des trois consignes de tensions scalaires V1*, V2* et V3* un vecteur tension de consigne $\vec{V}^*$. La logique de commande 4 peut déterminer le vecteur tension de consigne $\vec{V}^*$ selon une transformation "Clarke" connue de l'homme du métier. Dans ce cas, la logique de commande 4 calcule les deux composantes $V^*x$ et $V^*y$ du vecteur tension de consigne $\vec{V}^*$ selon les formules suivantes :

$$V^*x = \frac{2}{3}(V1^* - \frac{1}{2}\times V2^* - \frac{1}{2}\times V3^*)$$

et

$$V^*y = \frac{2}{3}(\frac{1}{2}\sqrt{3}\times V2^* - \frac{1}{2}\sqrt{3}\times V3^*) \quad .$$

On notera que bien entendu d'autres transformations peuvent être utilisées telle que la transformation de « Concordia » connue de l'homme du métier. Elle se différencie par le facteur de normalisation.

A l'étape 22, la logique de commande 4 détermine la position vectorielle du vecteur tension de consigne $\vec{V}^*$ dans l'hexagone formé par les vecteurs de commande $\vec{V}0$ à $\vec{V}7$ et plus particulièrement la position du vecteur de tension consigne dans un des secteurs actifs SH.

Ce vecteur tension de consigne $\vec{V}^*$ se trouve à tout moment dans un des six secteurs actifs SH de l'hexagone.

Ainsi, pour déterminer sa position, on calcule la phase du vecteur tension de consigne qui est égale à atan (V*y/V*x). Ensuite, on compare cette valeur avec la phase des vecteurs tension actifs. Par exemple si 0 < la phase du vecteur tension de consigne < 60° alors le vecteur tension de consigne se trouve dans le premier secteur.

Ensuite, le vecteur tension de consigne $\vec{V}^*$ est décomposé sur les deux vecteurs de commande actifs adjacents composant le secteur actif SH dans lequel il se trouve, comme illustré à la Fig. 2c.

Dans un exemple, le vecteur tension de consigne $\vec{V}^*$ est décomposé sur les deux vecteurs de commande actifs adjacents $\vec{V}1$ et $\vec{V}2$ composant le secteur actif SH1 dans lequel il se trouve illustré à la Fig. 2c.

Cette décomposition permet de déterminer des coefficients ti et tj tel que

$$\vec{V}^*=(\frac{ti}{Ts}\times\vec{Vi})+(\frac{tj}{Ts}\times\vec{Vj}) \quad .$$

Où Ts est la période selon laquelle l'onduleur est commandé. Et ti et tj correspondent aux temps d'applications des vecteurs de commande actifs $\vec{V}i$ et $\vec{V}j$ adjacents sur la période Ts, lesdits vecteurs de commande actifs définissant le secteur actif SH dans lequel se trouve le vecteur tension de consigne $\vec{V}^*$ comme vu précédemment. Le secteur actif SHN est défini par les vecteurs de commande actifs adjacents $\vec{V}N$ et $\vec{V}N+1$, 1 = 1 à 5, et le secteur actif SH6 est défini par les vecteurs de commande actifs adjacents $\vec{V}6$ et $\vec{V}1$.

Une fois que les temps d'applications ti et tj sont connus, i.e. après la décomposition du vecteur tension de consigne $\vec{V}^*$ dans le secteur actif SH de l'hexagone dans lequel il se trouve, la logique de commande 4 détermine les trois modulantes mod1, mod2 et mod3 pour le secteur actif SH concerné en fonction des temps d'applications des vecteurs de commande et de la période de commande de l'onduleur 1 via le tableau suivant :

| | Secteur SH1 | Secteur SH2 | Secteur SH3 |
|---|---|---|---|
| mod1 | (Max-Min)/Ts*(t1 + t2 + t0/2)+Mi | (Max-Min)/Ts*(t2 + t0/2)+Mi | (Max-Min)/Ts*(t0/2)+Min |

(suite)

|      | Secteur SH1 | Secteur SH2 | Secteur SH3 |
|------|-------------|-------------|-------------|
| mod2 | (Max-Min)/Ts*(t2 + t0/2)+Min | (Max-Min)/Ts*(t3 + t2 + t0/2)+Mi | (Max-Min)/Ts*(t3 + t4 + t0/2)+Min |
| mod3 | (Max-Min)/Ts*(t0/2)+Min | (Max-Min)/Ts*(t0/2)+Min | (Max-Min)/Ts*(t4 + t0/2)+Min |
|      | **Secteur SH4** | **Secteur SH5** | **Secteur SH6** |
| mod1 | (Max-Min)/Ts*(t0/2)+Min | (Max-Min)/Ts*(t6 + t0/2)+Min | (Max-Min)/Ts*(t1 + t6 + t0/2)+Min |
| mod2 | (Max-Min)/Ts*(t4 + t0/2)+Min | (Max-Min)/Ts*(t0/2)+Min | (Max-Min)fTs*(t0/2)+Min |
| mod3 | (Max-Min)/Ts*(t5 + t4 + t0/2)+Min | (Max-Min)/Ts*(t5 + t6 + t0/2)+Min | (Max-Min)/Ts*(t6 + t0/2)+Min |

Le tableau suivant s'applique pour Min = -1 et Max = 1.

|      | Secteur SH1 | Secteur SH2 | Secteur SH3 |
|------|-------------|-------------|-------------|
| mod1 | 2/Ts*(t1 + t2 + t0/2)-1 | 2/Ts*(t2 + t0/2)-1 | 2/Ts*(t0/2)-1 |
| mod2 | 2/Ts*(t2 + t0/2)-1 | 2/Ts*(t3 + t2 + t0/2)-1 | 2/Ts*(t3 + t4 + t0/2)-1 |
| mod3 | 2/Ts*(t0/2)-1 | 2/Ts*(t0/2)-1 | 2/Ts*(t4 + t0/2)-1 |
|      | **Secteur SH4** | **Secteur SH5** | **Secteur SH6** |
| mod 1 | 2/Ts*(t0/2)-1 | 2/Ts*(t6 + t0/2)-1 | 2/Ts*(t1 + t6 + t0/2)-1 |
| mod2 | 2/Ts*(t4 + t0/2)-1 | 2/Ts*(t0/2)-1 | 2/Ts*(t0/2)-1 |
| mod3 | 2/Ts*(t5 + t4 + t0/2)-1 | 2/Ts*(t5 + t6 + t0/2r1 | 2/Ts*(t6 + t0/2)-1 |

Le temps t0 représente le temps d'application des vecteurs de roue libre $\vec{V}0$ et $\vec{V}7$ . Le temps d'application t0 est déterminé suivant le secteur actif SH dans lequel se trouve le vecteur tension de consigne $\vec{V}*$. Lorsque le vecteur tension de consigne $\vec{V}*$ se trouve dans le premier secteur actif SH1 alors t0 = Ts - t1 - t2. Lorsqu'il est dans le deuxième secteur actif SH2 alors t0 = Ts - t2 - t3. Et ainsi de suite jusqu'au sixième secteur actif SH6 où t0 = Ts - t6 - t1.

Bien entendu, d'autres stratégies peuvent être utilisées dans le calcul de modulantes.

Après avoir déterminé les modulantes de chaque bras de pont selon une stratégie intersective ou barycentrique, tel que décrit ci-dessus,

**Dans une troisième étape**), on détermine le bras de pont à bloquer par rapport à la position du vecteur tension de consigne $\vec{V}*$ dans l'hexagone et plus particulièrement la position sectorielle du vecteur tension de consigne dans un des secteurs angulaires SA du repère statorique. Cette troisième étape est également effectuée par la logique de commande 4 à l'étape 22.

On notera que le vecteur tension de consigne $\vec{V}*$ se trouve à tout moment dans un des secteurs angulaires SA et dans une des zones H1 ou H2 de l'hexagone.

La position sectorielle du vecteur tension de consigne $\vec{V}*$ dans le repère statorique détermine l'état haut ou l'état bas du bras de pont à bloquer.

On notera qu'on entend par blocage d'un bras de pont le maintien dudit bras de pont dans un état donné. Autrement dit, les états des interrupteurs dudit bras de pont restent inchangés. Il n'y a pas de commutation du bras. L'état haut ou l'état bas, d'un bras de pont, définit lequel des deux interrupteurs dudit bras de pont est passant. Cet état haut et cet état bas sont, en général, définis par commodités. Dans un mode de réalisation non limitatif, on définit l'état haut lorsque les interrupteurs situés en haut de chaque bras de pont de l'onduleur sont fermés. Et on définit l'état bas lorsque ces mêmes interrupteurs sont ouverts. Le fait de connaître l'état d'un des deux interrupteurs d'un bras de pont, renseigne automatiquement sur l'état de l'autre interrupteur dudit bras de pont, car leur fonctionnement est ici complémentaire.

Le bras de pont à bloquer est fonction de la position sectorielle du vecteur tension de consigne $\vec{V}*$ dans les secteurs angulaires SA du repère statorique, de la manière suivante :

- si le vecteur tension de consigne $\vec{V}*$ est dans le premier secteur angulaire SA1 alors le premier bras B1 est bloqué à l'état haut,
- si le vecteur tension de consigne $\vec{V}*$ est dans le deuxième secteur angulaire SA2 alors le troisième bras B3 est bloqué à l'état bas,
- si le vecteur tension de consigne $\vec{V}*$ est dans le troisième secteur angulaire SA3 alors le deuxième bras B2 est bloqué à l'état haut,

- si le vecteur tension de consigne $\vec{V}*$ est dans le quatrième secteur angulaire SA4 alors le premier bras B1 est bloqué à l'état bas,
- si le vecteur tension de consigne $\vec{V}*$ est dans le cinquième secteur angulaire SA5 alors le troisième bras B3 est bloqué à l'état haut,
- si le vecteur tension de consigne $\vec{V}*$ est dans le sixième secteur angulaire SA6 alors le deuxième bras B2 est bloqué à l'état bas.

**Dans une quatrième étape 30 ou 40)**, on détermine si le vecteur consigne $\vec{V}*$ se trouve dans la zone interne hexagonale H1 ou la zone couronne hexagonale H2.

Dans un exemple non limitatif, on peut le faire de la manière suivante :

| Zones | Test sur les modulantes |
|---|---|
| H1 | $((Max+5.Min)/6 \leq mod_1 \leq (5.Max+Min)/6)$ et $((Max+5.Min)/6 \leq mod_2 \leq (5.)Max+Min)/6)$ et $((Max+5.Min)/6 \leq mod3_e \leq (5.Max+Min)/6)$ |
| H2 | $((mod_1 > (5.Max+Min)/6)$ ou $(mod_1 < (Max+5.Min)/6))$ ou $((mod_2 > (5.Max+Min)/6)$ ou $(mod_2 < (Max+5.Min)/6))$ ou $((mod_3 > (5.Max+Min)/6)$ ou $(mod_3 < (Max+5.Min)/6))$ |

Avec Max = +1 et Min = -1, on obtient :

| Zones | Test sur les modulantes |
|---|---|
| H1 | $(-2/3 \leq mod_1 \leq 2/3)$ et $(-2/3 \leq mod_2 \leq 2/3)$ et $(-2/3 \leq mod_3 \leq 2/3)$ |
| H2 | $((mod_1 > 2/3)$ ou $(mod_1 < -2/3)$ ou $((mod_2 > 2/3)$ ou $(mod_2 < -2/3))$ ou $((mod_3 > 2/3)$ ou $(mod_3 < -2/3))$ |

Lorsque le vecteur tension de consigne $\vec{V}*$ est dans la zone de l'hexagone interne H1 alors la logique de commande 4 applique les étapes 30 à 34. Et lorsque le vecteur tension de consigne $\vec{V}*$ est dans la zone de la couronne hexagonale H2 alors la logique de commande 4 applique les étapes 40 à 44.

Zone interne hexagonale H1 : comparaison simple porteuse

Ainsi, lorsque le vecteur tension de consigne $\vec{V}*$ est dans la zone de l'hexagone interne H1, les étapes suivantes sont effectuées.

**Dans une cinquième étape 31)**, La logique de commande 4 détermine une quantité de neutre $V_{n0}$ à injecter aux modulantes mod1, mod2 et mod3, en fonction de la position du vecteur tension de consigne $\vec{V}*$ dans les secteurs angulaires SA du repère statorique.

Lorsque le bras de pont Bj est à bloquer à l'état haut alors la logique de commande détermine une quantité de neutre $V_{n0} = Max - mod_j$. Lorsque le bras de pont Bj est à bloquer à l'état bas alors la logique de commande détermine une quantité de neutre $V_{n0} = Min - mod_j$. Dans notre exemple, on prend Max = +1 et Min = -1.

**Dans une sixième étape 32)**, la logique de commande 4 translate les modulantes mod1, mod2 et mod3 de cette quantité de neutre $V_{n0}$ déterminée. Cette translation est un ajout de la quantité de neutre $V_{n0}$ aux modulantes mod1, mod2 et mod3.

Ainsi, par exemple si le premier bras B1 doit être bloqué à l'état haut, alors la quantité de neutre $V_{n0}$ à ajouter aux trois modulantes mod1, mod2 et mod3 est égale à 1- $mod_1$. On obtient ainsi pour mod1, la valeur +1, pour mod2, la valeur mod2 +1 - mod1, et pour mod3, la valeur mod3 +1 -mod1.

**Dans une septième étape 33)**, la logique de commande 4 détermine au moins une porteuse. Cette porteuse est un signal dont la période est la période du microprocesseur 8 de manière à pouvoir régler la fréquence de commutation des interrupteurs des bras de pont de l'onduleur 1, par exemple à 50microsecondes pour une fréquence de commutation de 20kHz. La logique de commande 4 peut déterminer également autant de porteuses qu'il existe de bras de pont. Dans ce cas, chaque modulante d'un bras de pont est comparée à la porteuse correspondante. On modifie ainsi la succession des vecteurs de commande appliqués au niveau de l'ordre et des temps d'application sans modifier le temps d'application total de chacun des vecteurs.

Dans l'exemple pris, la logique de commande 4 détermine une seule porteuse pour les trois bras de pont. Cette porteuse est un triangle de manière à respecter une linéarité entre une modulante et la valeur moyenne de l'impulsion générée sur le bras correspondant sur la période Ts de contrôle de l'onduleur 1. Ainsi, la période Ts de cette porteuse est la période du microprocesseur 8.

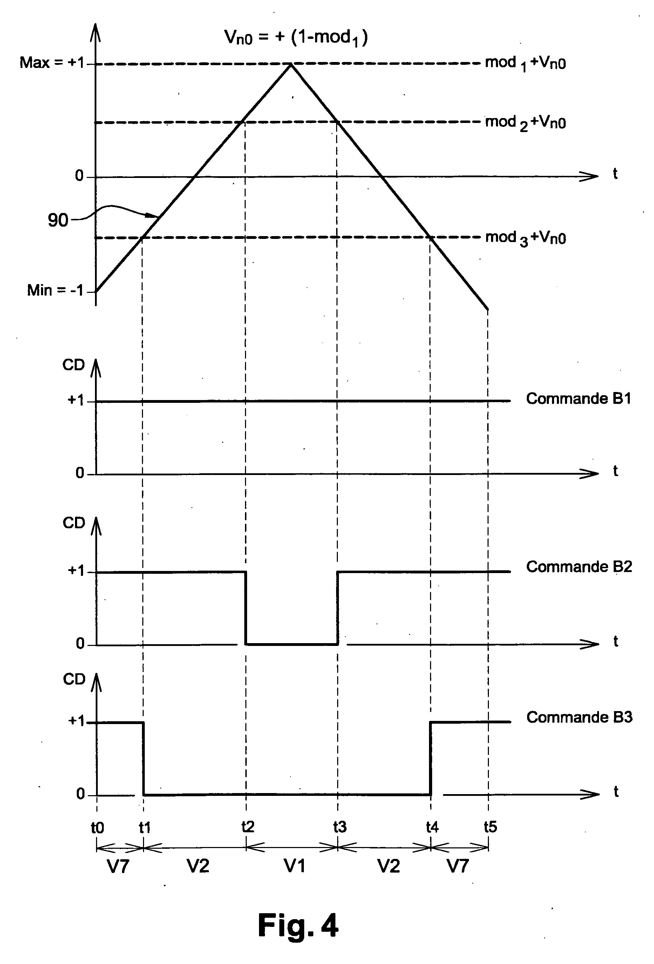

Dans l'exemple pris à la Fig. 4, ce triangle est pris entre une première valeur maximale Max, ici égale à 1, et une deuxième valeur minimale Min, ici égale à -1 respectivement pour le sommet et la base.

Dans une première variante non limitative cette porteuse est un triangle isocèle. Cela permet de centrer les impulsions sur la moitié de la période de découpage. Ainsi, on réduit les distorsions harmoniques des courants de phase. En conséquence, le pilotage de la charge est plus fin.

De plus, de façon non limitative, le sommet pointe vers le haut, i.e. que le sommet se trouve à la première valeur maximale Max = +1, et la base se trouve à la deuxième valeur minimale Min = -1.

Dans une deuxième variante, cette porteuse peut être un triangle quelconque permettant de modifier, si ce n'est la largeur de l'impulsion, la position de l'impulsion dans la période du microprocesseur 8.

Dans une autre variante, la porteuse peut être une succession de triangles dont la période est la période du microprocesseur 8. Cela correspond en fait à un échantillonnage régulier de la modulante.

Par la suite, la logique de commande 4 compare la porteuse aux trois modulantes mod1, mod2, mod3 translatées de la quantité de neutre $V_{n0}$. Un exemple de comparaison est donné à la Fig. 4 et sera décrit dans la suite de la description (voir paragraphe comparaison avec une simple porteuse décrit plus loin pour plus de détail).

En fonction de cette comparaison, la logique de commande 4 détermine, **dans une huitième étape 34)**, les ordres de commande SC (plus particulièrement les combinaisons des ordres de commande déterminant une succession de vecteurs de commande) à appliquer pour chacun des trois bras de pont de l'onduleur 1. Ces ordres de commande SC sont des fonctions de commutation des interrupteurs des bras de pont.

Cette technique du mouvement de la quantité de neutre $V_{n0}$ permet ainsi de réduire les sollicitations de l'onduleur 1 en terme de pertes, en faisant une simple intersection entre les nouvelles modulantes translatées. Cette réduction des sollicitations de l'onduleur 1 limite les pertes par commutation. En effet, cette technique permet de bloquer un bras de pont.

On notera que dans l'hexagone interne H1, le vecteur tension de consigne $\vec{V^*}$ est de faible norme, la valeur moyenne du courant de source est peu importante et l'utilisation obligatoire d'un vecteur de roue libre ne pénalise en rien la valeur efficace du courant dans le condensateur de filtrage.

Zone couronne hexagonale H2: comparaison avec une double porteuse

Lorsque le vecteur tension de consigne $\vec{V^*}$ est dans la zone de couronne hexagonale H2, les étapes suivantes sont effectuées.

Aux étapes 41 et 42, la logique de commande 4 applique la même méthode que celle aux étapes 31 et 32, pour déterminer la quantité de neutre à ajouter aux modulantes indépendamment des zones H où se trouve le vecteur tension de consigne $\vec{V^*}$.

**Dans une septième étape 43)**, la logique de commande 4 détermine une double porteuse. Cette double porteuse est formée de deux signaux dont la période est la période du microprocesseur 8.

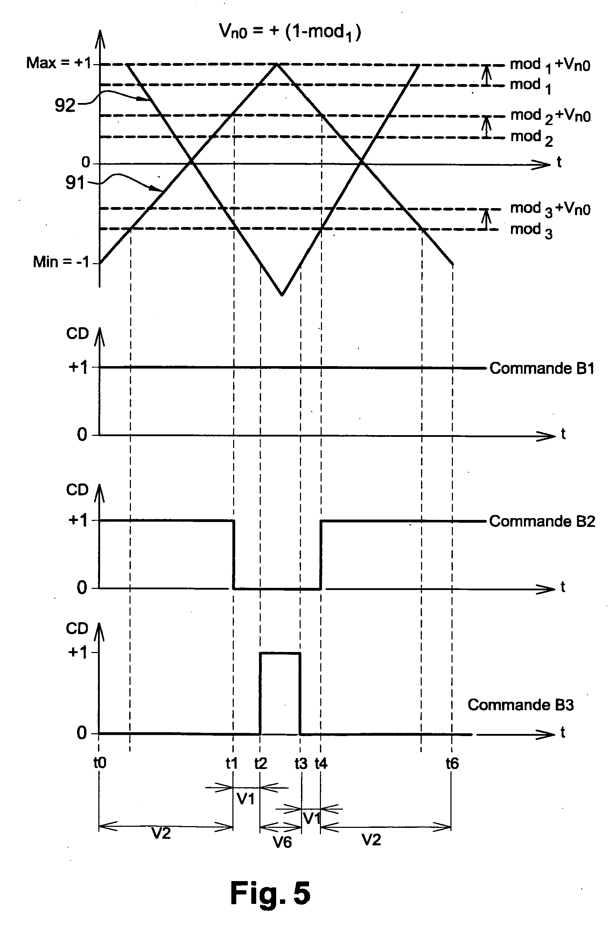

Dans l'exemple pris Fig. 5, cette double porteuse comporte une première porteuse en forme de triangle dont le sommet se trouve à une première valeur maximale Max et une deuxième porteuse en forme de triangle dont le sommet se trouve à une deuxième valeur minimale Min, les sommes des premier et deuxième triangles étant à la vertical l'un de l'autre. Dans une première variante non limitative, la première porteuse et la deuxième porteuse sont des triangles isocèles. La période de ces deux porteuses est la période de commande de l'onduleur 1.

Dans une autre variante, ces deux porteuses peuvent être formées par deux triangles quelconques permettant de modifier, si ce n'est la largeur de l'impulsion, la position de l'impulsion dans la période de commande de l'onduleur.

Encore, dans une autre variante, ces deux porteuses peuvent être une succession de triangles.

Comme il sera décrit plus en détail à la Fig. 5, la logique de commande 4 compare alors chacune des modulantes ne correspondant pas au bras bloqué à une seule des deux porteuses (voir paragraphe comparaison avec une double porteuse décrit plus loin pour plus de détail).

En fonction de cette comparaison, la logique de commande 4 détermine, **dans une huitième étape 44)**, les ordres de commande SC (plus particulièrement les combinaisons des ordres de commande déterminant une succession de vecteurs de commande) pour chacun des trois bras de pont de l'onduleur 1. Ces ordres de commande SC sont des fonctions de commutation des interrupteurs des bras de pont.

La logique de commande 4 applique à l'onduleur la succession de vecteurs de commande, représentant les ordres de commande, déterminés à l'étape 44.

L'utilisation de double porteuse permet d'éviter d'utiliser les vecteurs de roue libre permettant ainsi de diminuer la valeur efficace du courant dans le condensateur de filtrage.

On notera que en se limitant à N=2, il n'est pas nécessaire de mesurer le courant dans les phases de la machine, on économise alors plusieurs capteurs de courant. De plus, la localisation du vecteur tension de consigne dans l'hexagone est plus simple. Cette simplification de l'algorithme se répercute sur un choix non optimal du bras de pont à bloquer et donc une réduction moins prononcée des gains en terme de pertes par commutations par rapport au cas N=3.

### Décomposition de l'hexagone en 3 zones (N = 3)

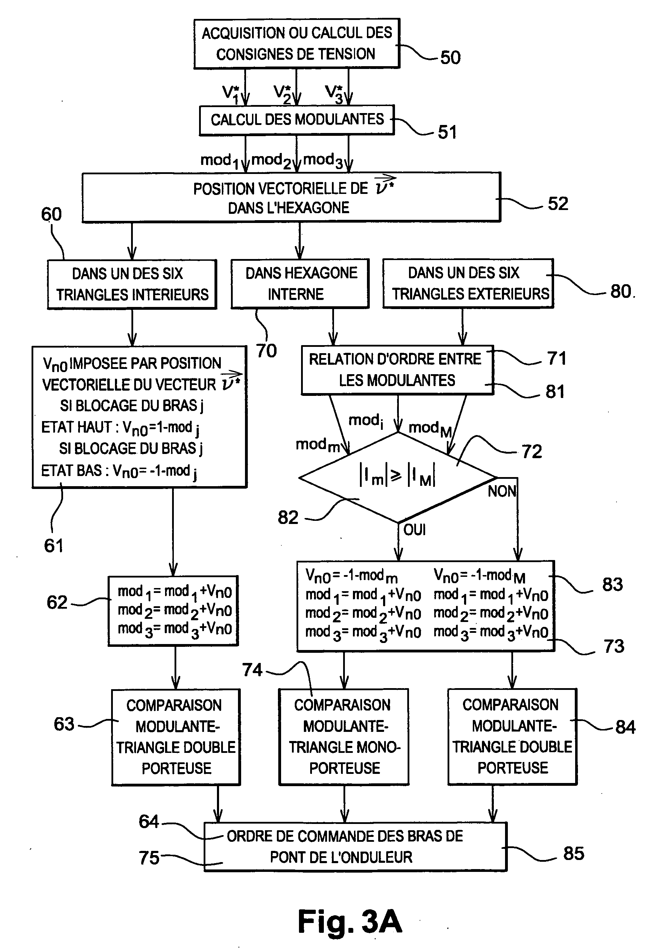

La Fig. 3a montre un procédé, selon l'invention, de fonctionnement des moyens illustrés à la Fig. 1a, lorsque N = 3. Le fait d'augmenter N permet de diminuer davantage les pertes par commutation en effectuant un choix optimal du bras à bloquer en fonction de la position d'un vecteur courant $\vec{I}$ représentant les courants de phase dans la charge 3.

Dans ce cas, l'hexagone comporte trois zones comme illustré à la Fig. 3b.

- Une première zone, qui est un hexagone interne H1 étant entouré par une couronne hexagonale.
- Une deuxième zone H3 qui est composée de l'intersection de la couronne avec les triangles équilatéraux formés en joignant des sommets de l'hexagone. Cette deuxième zone H3 est une réunion de triangles. Dans l'exemple de la Fig. 3b, la deuxième zone est formée de six triangles intérieurs TI, un triangle intérieur TIi étant celui traversé par le vecteur de commande $\vec{V}i$, i allant de 1 à 6.
- Une troisième zone H4 qui est le complément de la deuxième zone à la couronne hexagonale. Cette troisième zone H4 est une réunion de triangles. Dans l'exemple de la Fig. 3b, la troisième zone est formée de six. triangles extérieurs TE. La base d'un triangle extérieur TEi est formé par le segment liant les extrémités des vecteurs de commande $\vec{V}i$ et $\vec{V}i+1$, i allant de 1 à 5. Et, la base du triangle extérieur TE6 est formé par le segment liant les extrémités des vecteurs de commande $\vec{V}6$ et $\vec{V}1$.

Le procédé pour déterminer les ordres de commande de l'onduleur lorsque N=3 s'effectue de la manière suivante comme illustré à la Fig. 3a.

**Dans une première étape 50)**, la logique de commande 4 acquiert les trois consignes de tensions scalaires V1*, V2* et V3* de chacun des trois bras de l'onduleur. Dans un exemple non limitatif ces trois consignes de tensions scalaires V1*, V2* et V3* sont les tensions à appliquer à la charge 3.

**Dans une deuxième étape 51)**, la logique de commande 4 détermine pour chaque bras de pont de l'onduleur 1 la modulante correspondante et ce au moyen de la stratégie intersective ou barycentrique telles que vues précédemment dans l'exemple où N=2.

**Dans une troisième étape**, la logique de commande 4 détermine à partir des trois consignes de tensions scalaires V1*, V2* et V3* un vecteur tension de consigne $\vec{V}*$ en utilisant par exemple la transformation de Clarke telle que vue précédemment dans l'exemple où N=2.

**Dans une quatrième étape 52)**, la logique de commande détermine la position du vecteur tension de consigne $\vec{V}*$ dans l'hexagone. Ce vecteur tension de consigne $\vec{V}*$ se trouve à tout moment dans une des trois zones de l'hexagone H1, H3, H4.

Dans un exemple non limitatif, on peut le faire de la manière suivante :

| Zones | | Test sur les modulantes |
|---|---|---|
| H3 | TI1 | $(mod_1 > (5.Max+Min)/6)$ et $((Max+5.Min)/6 < mod_2 < (Max+Min)/2)$ et $((Max+5.Min)/6 < mod_3 < (Max+Min)/2)$ |
| | TI2 | $(mod_3 < (Max+5.Min)/6)$ et $((Max+Min)/2 < mod_2 < (5.Max+Min)/6)$ et $((Max+Min)/2 < mod_1 < (5.Max+Min)/6)$ |
| | TI3 | $(mod_2 > (5.Max+Min)/6)$ et $((Max+5.Min)/6 < mod_3 (Max+Min)/2)$ et $((Max+5.Min)/6 < mod_1 < (Max+Min)/2)$ |
| | TI4 | $(mod_1 < (Max+5.Min)/6)$ et $((Max+Min)/2 < mod_3 < (5.Max+Min)/6)$ et $((Max+Min)/2 < mod_2 < (5.Max+Min)/6)$ |
| | TI5 | $(mod_3 > (5.Max+Min)/6)$ et $((Max+5.Min)/6 < mod_1 < (Max+Min)/2)$ et $((Max+5.Min)/6 < mod_2 < (Max+Min)/2)$ |
| | TI6 | $(mod_2 < (Max+5.Min)/6)$ et $((Max+Min)/2 < mod_1 < (5.Max+Min)/6)$ et $((Max+Min)/2 < mod_3 < (5.Max+Min)/6)$ |
| H4 | TE1 | $(mod_1 > (5.Max+Min)/6)$ et $((Max+5.Min)/6 < mod_2 < (5.Max+Min)/6)$ et $(mod_3 < (Max+5.Min)/6)$ |
| | TE2 | $(mod_2 > (5.Max+Min)/6)$ et $((Max+5.Min)/6 < mod_1 < (5.Max+Min)/6)$ et $(mod_3 < (Max+5.Min)/6)$ |
| | TE3 | $(mod_2 > (5.Max+Min)/6)$ et $((Max+5.Min)/6 < mod_3 < (5.Max+Min)/6)$ et $(mod_1 < (Max+5.Min)/6)$ |
| | TE4 | $(mod_3 > (S.Max+Min)/6)$ et $((Max+5.Min)/6 < mod_2 < (5.Max+Min)/6)$ et $(mod_1 < (Max+5.Min)/6)$ |
| | TE5 | $(mod_3 > (5.Max+Min)/6)$ et $((Max+5.Min)/6 < mod_1 < (5.Max+Min)/6)$ et $(mod_2 < (Max+5.Min)/6)$ |
| | TE6 | $(mod_1 > (5.Max+Min)/6)$ et $((Max+5.Min)/6 < mod_3 < (5.Max+Min)/6)$ et $(mod_2 < (Max+5.Min)/6)$ |
| H1 | H1 | $((Max+5.Min)/6 \leq mod_1 \leq (5.Max+Min)/6)$ et $((Max+5.Min)/6 \leq mod_2 \leq (5.Max+Min)/6)$ et $((Max+5.Min)/6 \leq mod_3 \leq (5.Max+Min)/6)$ |

Avec Max = +1 et Min = -1, on obtient :

| Zones | Nom | Test |
|---|---|---|
| H3 | TI1 | $(mod_1 > 2/3)$ et $(-2/3 < mod_2 < 0)$ et $(-2/3 < mod_3 < 0)$ |
| | TI2 | $(mod_3 < -2/3)$ et $(0 < mod_2 < 2/3)$ et $(0 < mod_1 < 2/3)$ |
| | TI3 | $(mod_2 > 2/3)$ et $(-2/3 < mod_3 < 0)$ et $(-2/3 < mod_1 < 0)$ |
| | TI4 | $(mod_1 < -2/3)$ et $(0 < mod_3 < 2/3)$ et $(0 < mod_2 < 2/3)$ |
| | TI5 | $(mod_3 > 2/3)$ et $(-2/3 < mod, < 0)$ et $(-2/3 < mod_2 < 0)$ |
| | TI6 | $(mod_2 < -2/3)$ et $(0 < mod_1 < 2/3)$ et $(0 < mod_3 < 2/3)$ |
| H4 | TE1 | $(mod_1 > 2/3)$ et $(-2/3 < mod_2 < 2/3)$ et $(mod_3 < -2/3)$ |
| | TE2 | $(mod_2 > 2/3)$ et $(-2/3 < mod_1 < 2/3)$ et $(mod_3 < -2/3)$ |
| | TE3 | $(mod_2 > 2/3)$ et $(-2/3 < mod_3 < 2/3)$ et $(mod_1 < -2/3)$ |
| | TE4 | $(mod_3 > 2/3)$ et $(-2/3 < mod_2 < 2/3)$ et $(mod_1 < -2/3)$ |
| | TE5 | $(mod_3 > 2/3)$ et $(-2/3 < mod_1 < 2/3)$ et $(mod_2 < -2/3)$ |
| | TE6 | $(mod_1 > 2/3)$ et $(-2/3 < mod_3 < 2/3)$ et $(mod_2 < -2/3)$ |
| H1 | H1 | $(-2/3 \leq mod_1 \leq 2/3)$ et $(-2/3 \leq mod_2 \leq 2/3)$ et $(-2/3 \leq mod_3 \leq 2/3)$ |

Lorsque le vecteur tension de consigne $\vec{V}*$ est dans la première zone de l'hexagone H1 alors la logique de commande 4 applique les étapes 70 à 75. Lorsque le vecteur tension de consigne $\vec{V}*$ est dans la deuxième zone H3 de l'hexagone alors la logique de commande 4 applique les étapes 60 à 64. Et lorsque le vecteur tension de consigne $\vec{V}*$ est dans la troisième zone H4 de l'hexagone alors la logique de commande 4 applique les étapes 80 à 85.

Deuxième zone H3 : comparaison double porteuse

Dans les étapes 60 à 64, le vecteur tension de consigne $\vec{V}*$ est dans la deuxième zone H3. Dans ce cas, dans une cinquième étape 61), la logique de commande 4 détermine le bras de pont à bloquer. Il est fonction de la position du vecteur tension de consigne $\vec{V}*$ dans un des six triangles intérieurs TIi:

- si le vecteur tension de consigne $\vec{V}*$ est dans le triangle intérieur TI1 alors le premier bras B1 est bloqué à l'état haut,
- si le vecteur tension de consigne $\vec{V}*$ est dans le triangle intérieur TI2 alors le troisième bras B3 est bloqué à l'état bas,
- si le vecteur tension de consigne $\vec{V}*$ est dans le triangle intérieur TI3 alors le deuxième bras B2 est bloqué à l'état haut,
- si le vecteur tension de consigne $\vec{V}*$ est dans le triangle intérieur TI4 alors le premier bras B1 est bloqué à l'état bas,
- si le vecteur tension de consigne $\vec{V}*$ est dans le triangle intérieur TI5 alors le troisième bras B3 est bloqué à l'état haut,
- si le vecteur tension de consigne $\vec{V}*$ est dans le triangle intérieur TI6 alors le deuxième bras B2 est bloqué à l'état bas.

**Dans une sixième étape)**, la logique de commande 4 détermine une quantité de neutre $V_{n0}$ à injecter aux modulantes mod1, mod2 et mod3, en fonction de la position du vecteur tension de consigne $\vec{V}*$. Lorsque le bras de pont Bj est à bloquer à l'état haut alors la logique de commande détermine une quantité de neutre $V_{n0} = Max- mod_j.$. Et lorsque le bras de pont Bj est à bloquer à l'état bas alors la logique de commande détermine- une quantité de neutre $V_{n0} = Min- mod_j$. Cette étape est effectuée également lors de l'étape 61 indiquée sur la Fig. 3a. Dans l'exemple pris, Max = +1 et Min = -1.

**Dans une septième étape 62)**, la logique de commande 4 translate les modulantes mod1, mod2 et mod3 par ajout de cette quantité de neutre $V_{n0}$ déterminée.

**Dans une huitième étape 63)**, la logique de commande détermine la double porteuse. Dans l'exemple non limitatif de la Fig. 5, cette double porteuse comporte une première porteuse 91 en forme de triangle isocèle dont le sommet pointe vers le haut et une deuxième porteuse 92 en forme de triangle isocèle dont le sommet pointe vers le bas, les sommets des premier et deuxième triangles étant à la vertical l'un de l'autre.

La logique de commande 4 compare chacune des modulantes ne correspondant pas au bras bloqué à une seule des deux porteuses.

En fonction de cette comparaison, la logique de commande 4 **détermine, dans une neuvième étape 64)**, les ordres de commande des trois bras de pont de l'onduleur. La logique de commande 4 applique à l'onduleur la succession de vecteurs de commande résultant de ces ordres de commande, déterminés à l'étape 64.

16

Première zone H1 : comparaison simple porteuse, troisième zone H4 : comparaison double porteuse

Lorsque le vecteur tension consigne $\vec{V}^*$ est dans la première zone H1 ou la troisième zone H4 alors la logique de commande 4 applique les mêmes méthodes (71 à 73, et 81 à 83) pour déterminer le bras de pont à bloquer, illustrées à la Fig. 3a.

Dans les étapes 70 à 75 ou 80 à 85, le vecteur tension de consigne $\vec{V}^*$ est respectivement dans la première zone H1 ou la troisième zone H4 de l'hexagone. Dans ce cas, la logique de commande 4 détermine le bras de pont à bloquer à partir d'un vecteur courant $\vec{I}$. Le blocage d'un bras de pont va permettre de diminuer les pertes par commutation dans les interrupteurs.

A cet effet, à l'étape 71 ou 81 de la Fig. 3a, dans une première variante de réalisation non limitative, la logique de commande 4 sélectionne en premier deux bras de pont, parmi les trois, susceptibles d'être bloqués en fonction d'une relation d'ordre entre les trois modulantes mod1, mod2, mod3 des trois bras de pont, cette relation d'ordre étant dans un exemple non limitatif une comparaison. Ainsi, les deux bras de pont sélectionnés sont le bras de pont ayant la modulante $mod_M$ la plus importante et le bras de pont ayant la modulante $mod_m$ la moins importante selon la comparaison des trois modulantes, le bras de pont correspondant à la modulante intermédiaire ne pouvant être bloqué sans bloquer un autre bras et ainsi rendre impossible la génération en moyenne du vecteur tension de consigne $\vec{V}^*$ car un seul vecteur de commande actif et un seul vecteur de roue libre seraient disponibles.

Dans une deuxième variante de réalisation non limitative, la logique de commande 4 sélectionne les deux bras de pont susceptibles d'être bloqués en fonction d'une comparaison entre les trois consignes de tensions scalaires V1*, V2* et V3* car quelque soit la méthode de calcul des modulantes (ici, intersective ou barycentrique), la relation d'ordre entre les trois modulantes est la même qu'entre les trois consignes de tension scalaires en raison de la relation qui existe entre une modulante et la consigne de tension scalaire correspondante. Les deux bras de pont sélectionnés sont le bras de pont ayant la consigne de tension scalaire la plus importante et le bras de pont ayant la consigne de tension scalaire la moins importante.

Pour la suite des étapes, on se place dans le cadre de la première variante.

La logique de commande 4, à l'étape 72 ou 82, choisit le bras de pont à bloquer parmi les deux bras sélectionnés précédemment. Elle détermine, d'une part, le courant de phase $I_M$, pour le bras de pont ayant la modulante $mod_M$ la plus importante, et d'autre part le courant de phase $I_m$, pour le bras de pont ayant la modulante $mod_m$ la moins importante. Pour déterminer le bras de pont qui sera bloqué, la logique de commande 4 compare les valeurs absolues de ces courants de phase $I_M$ et $I_m$. Elle bloque le bras de pont dont la valeur absolue du courant de phase est le plus important en valeur absolue. Si cela correspond au bras de pont ayant la modulante la plus importante $mod_M$, alors le bras est bloqué à l'état haut. Si cela correspond au bras de pont ayant la modulante la moins importante $mod_m$, alors le bras est bloqué à l'état bas.

A l'étape 73 ou 83, la logique de commande 4 détermine une quantité de neutre $V_{n0}$ à injecter aux modulantes mod1, mod2 et mod3, en fonction du résultat de la comparaison.

Dans le cas où, la valeur absolue du courant de phase $I_m$ de la plus petite modulante $mod_m$ est supérieure à la valeur absolue du courant de phase $I_M$ de la plus grande modulante $mod_m$, alors la logique de commande 4 détermine une quantité de neutre $V_{n0}$ qui est égale à une deuxième valeur minimale Min moins la plus petite modulante $mod_m$. La quantité de neutre $V_{n0}$ = Min - $mod_m$. Dans l'exemple pris non limitatif, la deuxième valeur minimale Min est égale à -1.

Dans le cas contraire, la logique de commande 4 détermine une quantité de neutre $V_{n0}$ qui est égale à une première valeur maximale Max moins la plus grande modulante $mod_M$. La quantité de neutre $V_{n0}$ = Max - $mod_M$. Dans l'exemple pris non limitatif" la première valeur maximale Max est égale à +1.

Les modulantes mod1, mod2 et mod3 sont translatées par ajout de cette quantité de neutre déterminée de manière à bloquer un bras.

Par ailleurs, selon une première variante non limitative, si la valeur absolue du courant de phase $|I_m|$ de la plus petite modulante $mod_m$ est égale à la valeur absolue du courant de phase $|I_M|$ de la plus grande modulante $mod_M$ alors la quantité de neutre $V_{n0}$ est égale à -1 - $mod_m$. La Fig. 3a illustre cette première variante.

Selon une deuxième variante non limitative, si la valeur absolue du courant de phase |Im| de la plus petite modulante $mod_m$ est égale à la valeur absolue du courant de phase $|I_m|$ de la plus grande modulante $mod_M$ alors la quantité de neutre $V_{n0}$ est égale à 1 - $mod_M$.

A l'étape 74 ou 84, la logique de commande 4 compare les modulantes translatées à un système de porteuse respectivement simple ou double.

En ce qui concerne le système de simple porteuse (voir paragraphe comparaison avec une simple porteuse ci-après pour plus de détail), la logique de commande 4 compare la porteuse aux trois modulantes translatées. En fonction de cette comparaison, la logique de commande 4 détermine, à l'étape 75, les ordres de commande des trois bras de pont de l'onduleur.

La logique de commande 4 applique à l'onduleur la succession de vecteurs de commande, représentant les ordres de commande, déterminés à l'étape 75, de manière à générer en moyenne le vecteur tension de consigne $\vec{V}^*$ à

appliquer à la charge 3 par ledit onduleur 1 pour piloter ladite charge.

En ce qui concerne le système double porteuse (voir paragraphe comparaison avec une double porteuse ci-après pour plus de détail), la logique de commande 4 compare les porteuses aux deux modulantes translatées correspondant aux bras qui commutent (qui doivent changer d'état), une par bras.

En fonction de cette comparaison, la logique de commande 4 détermine, à l'étape 85, les ordres de commande ou fonctions de commutation SC des trois bras de pont de l'onduleur, de manière à générer en moyenne le vecteur tension de consigne $\vec{V}^*$ à appliquer à la charge 3 par ledit onduleur 1 pour piloter ladite charge.

La logique de commande 4 applique à l'onduleur la succession de vecteurs de commande, représentant les ordres de commande SC, déterminés à l'étape 85.

Ces ordres de commandes sont des fonctions de commutation SC des interrupteurs des bras de pont.

On notera que pour N=3, la connaissance des courants de phase permet de faire un choix optimal du bras de pont à bloquer dans les zones H1 et H4. Dans les triangles intérieurs, on force le bras de pont à bloquer sans considération de la valeur des courants de phase. Cependant cela permet d'utiliser le système à double porteuse et donc de réduire le courant efficace dans le condensateur de découplage.

## Comparaison avec une simple porteuse

Ce paragraphe décrit de manière détaillée l'utilisation d'une simple porteuse pour déterminer les ordres de commandes à envoyer aux bras de pont de l'onduleur. Cette simple porteuse est un signal dont la période est la période de découpage. La logique de commande 4 peut déterminer également autant de simples porteuses qu'il existe de bras de pont. Dans ce cas, chaque modulante d'un bras de pont est comparée à la simple porteuse correspondante. Ces simples porteuses peuvent être différentes les unes des autres.

Dans l'exemple de la Fig. 4, la logique de commande 4 détermine une seule simple porteuse pour les trois bras de pont. Cette simple porteuse 90 est un triangle de manière à respecter une linéarité entre une modulante et la valeur moyenne de l'impulsion générée sur le bras correspondant sur la période Ts de contrôle de l'onduleur 1. Dans l'exemple pris à la Fig. 4, ce triangle est pris entre une première valeur maximale Max, ici égale à 1, et une deuxième valeur minimale Min, ici égale à -1 respectivement pour le sommet et la base. Dans un mode de réalisation non limitatif, cette simple porteuse 90 est un triangle isocèle. De plus, de façon non limitative, le sommet pointe vers le haut, i.e. que le sommet se trouve à la première valeur maximale Max = +1, et la base se trouve à la deuxième valeur minimale Min = -1.

Dans un autre mode, cette porteuse 90 peut être un triangle quelconque permettant de modifier, si ce n'est la largeur des impulsions, la position desdites impulsions dans la période de découpage ou encore la polarité desdites impulsions (sommet pointant vers le bas).

Dans un autre mode, la porteuse 90 peut être également une succession de triangles dont la période est la période de découpage Ts de l'onduleur 1.

Cette porteuse 90 peut être également un triangle dont le sommet pointe vers le bas, i.e. que le sommet se trouve à la deuxième valeur minimale Min = -1, et la base se trouve à la première valeur maximale Max = +1.

On notera que la période de découpage Ts n'est pas forcément constante lors de l'utilisation de l'onduleur de manière à étaler le spectre des tensions de sortie de l'onduleur 1, de ce fait la période de la porteuse également. Cet étalement de spectre permet de modifier le bruit acoustique généré par la charge polyphasée 3.

La Fig. 4 montre la comparaison entre la simple porteuse 90 et les trois modulantes mod1, mod2 et mod3 translatées de la quantité de neutre $V_{n0}$.

Sur la Fig. 4, le premier chronogramme présente un axe dont l'abscisse représente le temps et l'ordonnée des valeurs normalisées de tension, et les trois autres chronogrammes présentent un axe dont l'abscisse représente le temps et l'ordonnée les fonctions de commutation SC de chacun des trois bras de pont B1, B2 et B3 respectivement.

Dans l'exemple de la Fig. 4, la modulante mod1 est calculé pour le bras de pont B1, la modulante mod2 est calculée pour le bras de pont B2 et la modulante mod3 est calculé pour le bras de pont B3.

La modulante mod3 est, dans l'exemple de la Fig. 4, la modulante la moins importante entre les trois modulantes et la modulante mod1 est la plus importante. La plus grande des modulantes $\text{mod}_m$ égale la modulante mod1. Dans ce cas, la logique de commande 4 bloque le bras de pont B1 car le courant Il est supérieur au courant I3 en valeur absolue. De ce fait, la quantité de neutre à ajouter aux trois modulantes est $V_{n0}$- 1- mod1. Le bras de pont B1 bloqué à l'état haut a sa modulante translatée qui vaut +1.

Le bras de pont B1 bloqué à l'état haut présente à l'intersection avec la porteuse 90 triangulaire non pas un intervalle de temps (au sommet de la porteuse, à l'intersection de la porteuse triangulaire et de la modulante mod1+Vn0), mais plutôt une intersection ponctuelle, comme le montre la Fig. 4. Le bras de pont B1 ne change donc pas d'état.

La comparaison entre la porteuse 90 et les modulantes translatées permettent de définir la succession des ordres de commande SC à appliquer à l'onduleur. Ainsi l'intersection entre les modulantes translatées et la porteuse 90 détermine une commande de type impulsionnel (front montant : interrupteur haut se ferme, interrupteur bas s'ouvre ; et front descendant : interrupteur haut s'ouvre et interrupteur bas se ferme) sur chacun des bras de pont B2 et B3 à commuter. De ce fait, la logique de commande 4 commande l'onduleur par une succession de vecteurs de commande.

Ainsi, à l'instant t0, le bras de pont B1 est bloqué à l'état haut, sa modulante translatée de la quantité de neutre $V_{n0}$ présente une droite horizontale à +1. A cet instant t0, les modulantes translatées des bras, de pont B2 et B3 se trouvent en dehors de la porteuse 90, i.e. ne présentent pas d'intersection avec ladite porteuse et se situe à l'extérieur de la surface du triangle formée par la porteuse. Les interrupteurs de ces deux bras de pont sont à l'état haut. Dans cet intervalle, les fonctions de commutation correspondantes valent +1. Ces deux bras restent donc à l'état haut. Ils ne changent donc pas d'état.

A l'instant t1, la modulante mod3 + $V_{n0}$ entre en contact avec un des côtés de la porteuse 90. La logique de commande 4 envoie au bras de pont B3 un ordre de commande SC. Cet ordre de commande commute le bras de pont B3. Le bras de pont B3 change d'état et passe donc à l'état bas.

A l'instant t2, la modulante mod2 + $V_{n0}$ entre en contact avec un des côtés de la porteuse 90. La logique de commande 4 envoie au bras de pont B2 un ordre de commande SC. Cet ordre de commande commute le bras de pont B2. Le bras de pont B2 change donc d'état et passe à l'état bas.

Dans l'intervalle t2 à t3, la modulante mod2 + $V_{n0}$ se trouve dans le triangle de la porteuse 90, i.e. ne présentent pas d'intersection avec ladite poreuse et se situe à l'intérieur de la surface du triangle formée par la porteuse. Pendant toute cette période le bras de pont B2 reste à l'état bas.

A l'instant t3, la modulante mod2 + $V_{n0}$ entre de nouveau en contact avec un autre des côtés de la porteuse 90. A partir de cet instant, la logique de commande 4 envoie au bras de pont B2 un ordre de commande SC. Cet ordre de commande commute le bras de pont B2 à l'état haut.

Dans l'intervalle t1 à t4, la modulante mod3 + $V_{n0}$ se trouve dans le triangle de la porteuse 90. Pendant toute cette période le bras de pont B3 reste à l'état bas.

A l'instant t4, la modulante mod3 + $V_{n0}$ entre de nouveau en contact avec un autre des côtés de la porteuse 90. A partir de cet instant, la logique de commande 4 envoie au bras de pont B3 un ordre de commande SC. Cet ordre de commande commute le bras de pont B3 à l'état haut.

## Comparaison avec une double porteuse

Ce paragraphe décrit de manière détaillée l'utilisation d'une double porteuse pour déterminer les ordres de commandes à envoyer aux bras de pont de l'onduleur Dans l'exemple de la Fig. 5, cette double porteuse est composée d'une première porteuse 91 en forme de triangle isocèle dont le sommet et la base se trouvent respectivement à une première valeur maximale Max=+1 et à une deuxième valeur minimale Min=-1 et d'une seconde porteuse 92 en forme de triangle isocèle dont la base et le sommet se trouvent respectivement à une première valeur maximale Max=+1 et à une deuxième valeur minimale Min=-1.

La Fig. 5 montre la comparaison entre la double porteuse 91,92 et les trois modulantes mod1, mod2 et mod3 translatées de la quantité de neutre $V_{n0}$. Dans l'exemple de la Fig. 5, la modulante mod1 est calculée pour le bras de pont B1, la modulante mod2 est calculée pour le bras de pont B2 et la modulante mod3 est calculée pour le bras de pont B3. La modulante mod3 est, dans l'exemple de la Fig. 5, la modulante la moins importante entre les trois modulantes. Un bras de pont est bloqué, ici le premier bras B1 et ne change pas d'état pendant la période du microprocesseur. Ainsi, la comparaison de sa modulante associée avec la ou les porteuses ne définit pas de changement d'état pour ce bras. Les deux autres bras de pont B2 et B3 restant ont leurs modulantes comparées chacune à une porteuse différente, une porteuse 91 de type triangulaire dont le sommet et la base se trouvent respectivement à une première valeur maximale. Max=+1 et à une deuxième valeur minimale Min=-1 et une autre porteuse 92 de type triangulaire dont la base et le sommet se trouvent respectivement à une première valeur maximale Max=+1 et à une deuxième valeur minimale Min=-1.

On peut indifféremment associer à une modulante, relative à un bras qui commute, une porteuse ou l'autre sans modifier le résultat recherché. Dans l'exemple de la Fig. 5, la logique de commande 4 module le bras B2 avec la porteuse 91 et l'autre bras B3 de pont qui commute avec la porteuse 92. Ces choix auraient bien évidemment pu être inversés.

Dans le cas de l'exemple de la Fig.5, la logique de commande 4 bloque le bras de pont B1 à l'état haut. De ce fait, la quantité de neutre à ajouter aux trois modulantes est $V_{n0}$ = 1- mod1. Le bras de pont B1 bloqué a sa modulante translatée qui vaut +1.

La modulante translatée du bras de pont B1 bloqué présente à l'intersection avec la porteuse triangulaire dont le sommet pointe vers le haut non pas un intervalle de temps, mais plutôt une intersection ponctuelle, comme le montre la Fig. 5. Le bras de pont B1 ne change donc pas d'état. On notera que quelque soit la porteuse utilisée, l'intersection entre la porteuse et la modulante translatée n'est que ponctuelle et par conséquent, le bras correspondant reste toujours bloqué.

Dans cet exemple de la Fig.5, le bras de pont B2 est comparé à la porteuse 91 tandis que le bras de pont B3 est comparé à la porteuse 92.

A l'instant t0, la modulante translatée du bras de pont B2 se trouve en dehors de la porteuse 91, ici, le bras de pont B2 est à l'état haut. La modulante translatée du bras de pont B3 se trouve en dehors de la porteuse 92 triangulaire dont le sommet pointe vers le bas. Ici, le bras de pont B3 est à l'état bas.

A l'instant t1, la modulante mod2 + $V_{n0}$ entre en contact avec un des côtés de la porteuse 91. La logique de commande 4 envoie au bras de pont B2 un ordre de commande SC. Cet ordre de commande commute le bras de pont B2. Le bras de pont B2 passe à l'état bas.

A l'instant t2, la modulante mod3 + $V_{n0}$ entre en contact avec un des côtés de la porteuse 92. La logique de commande 4 envoie au bras de pont B3 un ordre de commande SC. Cet ordre de commande commute le bras de pont B3. Le bras de pont B3 passe à l'état haut.

Dans l'intervalle t2 à t3, la modulante mod3 + $V_{n0}$ se trouve dans le triangle de la porteuse 92. Pendant toute cette période le bras de pont B3 reste à l'état haut.

A l'instant t3, la modulante mod3 + $V_{n0}$ entre de nouveau en contact avec un autre des côtés de la porteuse 92. A partir de cet instant, la logique de commande 4 envoie au bras de pont B3 un ordre de commande SC. Cet ordre de commande commute le bras de pont B3 à l'état bas.

Dans l'intervalle t1 à t4, la modulante mod2 + $V_{n0}$ se trouve dans le triangle de la porteuse 91. Pendant toute cette période le bras de pont B2 reste à l'état bas.

A l'instant t4, la modulante mod2 + $V_{n0}$ entre de nouveau en contact avec un autre des côtés de la porteuse 91. A partir de cet instant, la logique de commande 4 envoie au bras de pont B2 un ordre de commande SC. Cet ordre de commande commute le bras de pont B2 à l'état haut.

On notera que cette technique du mouvement de la quantité de neutre $V_{n0}$ permet de réduire les sollicitations de l'onduleur 1 en terme de pertes (car il y a toujours un bras bloqué et on économise de ce fait les pertes par commutation dans ce bras), en faisant une simple intersection entre les nouvelles modulantes translatées. Cette réduction des sollicitations de l'onduleur 1 limite les pertes par commutation. Ceci est valable pour la simple porteuse ou la double porteuse.

Enfin, l'utilisation d'une double porteuse permet de réduire encore plus le courant efficace dans la capacité de filtrage et par conséquent de stabiliser la tension Udc en amont de l'onduleur et donc de réduire la taille du condensateur de découplage 7 côté continu car on n'utilise plus de vecteur de roue libre.

On notera que l'établissement des ordres de commandes SC par la méthode d'intersection entre une modulante et une porteuse triangulaire entraîne que les ordres de commandes SC de l'onduleur sont en tout ou rien. Par ailleurs, en fonction de la valeur de la modulante, la largeur des impulsions résultantes est variable. Il y a donc une modulation de largeur d'impulsions et donc un pilotage de l'onduleur par MLI. C'est ce qu'on a vu sur les Fig. 4 et 5.

On notera que dans tous les cas où on fait une comparaison avec une double porteuse, on peut bien entendu, à la place, faire une comparaison avec une simple porteuse, mais cela est moins intéressant, notamment pour réduire le courant efficace dans le condensateur.

Par ailleurs, dans les cas où on fait une comparaison avec une simple porteuse (Zone H1 pour N=2 ou3), on peut également, à la place, faire une comparaison avec une double porteuse. Cependant, on aura toujours un vecteur de roue libre utilisé.

Enfin, le procédé de l'invention décrit fonctionne aussi bien en régime permanent qu'en régime dynamique. En effet, cela fonctionne en régime dynamique car on ne se soucie pas de l'évolution temporelle des courants de phase. On les regarde juste à un instant. On fonctionne donc ici en discret.

**Revendications**

1. Procédé de pilotage d'un pont de puissance (1) destiné à commander une charge électrique (3) comportant plusieurs phases, le pont de puissance (1) étant destiné à être relié à la charge électrique (3) via plusieurs bras (B1, ..., B3), au moins un par phase, et étant destiné à être piloté par des fonctions de commutations (SC1, SC2, SC3), lesdites fonctions de commutation déterminant des vecteurs de commande $\vec{V}^*$ ,..., $\vec{V}7$ ) pour commander la charge, lesdits vecteurs de commande ($\vec{V}0$ ,..., $\vec{V}7$) se subdivisant en vecteurs de commande de roue libre ($\vec{V}0$, $\vec{V}7$) et en vecteurs de commande actifs ($\vec{V}1$..., $\vec{V}6$),
   le procédé comportant les étapes de :

   - Sélectionner une première méthode de production de fonctions de commutations qui produit un nombre réduit de combinaison de fonctions de commutation correspondant à des vecteurs de commande de roue libre ($\vec{V}0$, $\vec{V}7$) ou une deuxième méthode de production de fonctions de commutations qui produit uniquement des combinaisons de fonctions de commutation correspondant à des vecteurs de commande actifs ($\vec{V}1$,..., $\vec{V}6$ ), lesdites méthodes étant définies en fonction d'un vecteur tension de consigne donné ($\vec{V}^*$ ) et comportant une étape de détermination d'une modulante ($mod_1$, $mod_2$, $mod_3$) associée à chaque bras du pont à partir de consignes de tension scalaires (V1*, V2*, V3*), et

- Appliquer ladite méthode sélectionnée pour produire une succession de vecteurs de commandes à partir des combinaisons de fonctions de commutations produites *caractérisé en ce qu'une* méthode de production de fonctions de commutations comporte une étape de comparaison de modulantes translatées d'une quantité de neutre avec une porteuse, une modulante étant associée à chaque bras de pont, ladite comparaison définissant des fonctions de commutation (SC) pour piloter ledit pont.,

2. Procédé de pilotage d'un pont de puissance (1) selon la revendication 1, *caractérisé en ce que* la sélection d'une méthode de production de fonctions de commutations est basée sur un positionnement d'un vecteur tension de consigne ($\vec{V^*}$) dans une zone (H) d'un domaine du plan défini par des vecteurs de commande ($\vec{V}0$ ,..., $\vec{V}7$), le vecteur tension de consigne ($\vec{V}^*$) étant déterminé à partir de consignes de tension scalaires (V1*, V2*, V3*).

3. Procédé de pilotage d'un pont de puissance (1) selon la revendication précédente, *caractérisé en ce que* le domaine du plan est divisé en une première et une deuxième zones (H1, H2) et **en ce que** la première méthode de production de fonctions de commutations est sélectionnée si le vecteur tension de consigne ($\vec{V^*}$) est positionné dans la première zone (H1), et **en ce que** la deuxième méthode de production de fonctions de commutations est sélectionnée si le vecteur tension de consigne ($\vec{V^*}$) est positionné dans la deuxième zone (H2).

4. Procédé de pilotage d'un pont de puissance (1) selon la revendication 2, *caractérisé en ce que* le domaine du plan est divisé en une première (H1), une deuxième (H3) et une troisième (H4) zones et **en ce que** la première méthode de production de fonctions de commutations est sélectionnée si le vecteur tension de consigne ($\vec{V^*}$) positionné dans la première zone (H1).

5. Procédé de pilotage d'un pont de puissance (1) selon la revendication 2 ou 4, *caractérisé en ce que* le domaine du plan est divisé en une première (H1), une deuxième (H3) et une troisième (H4) zones et **en ce que** la deuxième méthode de production de fonctions de commutations est sélectionnée si le vecteur tension de consigne ($\vec{V^*}$) est positionné dans la deuxième zone (H3) ou troisième zone (H4).

6. Procédé de pilotage d'un pont de puissance (1) selon l'une quelconque des revendications 1 à 5, *caractérisé en ce que* la méthode de production de fonctions de commutations est la première méthode de production de fonctions de commutations et la porteuse est une simple porteuse.

7. Procédé de pilotage d'un pont de puissance (1) selon l'une quelconque des revendications 1 à 5 *caractérisé en ce que* la méthode de production de fonctions de commutations est la deuxième méthode de production de fonctions de commutations et la porteuse est une double porteuse.

8. Procédé selon la revendication précédente, **caractérisé en ce qu'**une double porteuse comporte deux simples porteuses (91, 92) et **en ce qu'**au moins une modulante est comparé à une seule des porteuses de la double porteuse.

9. Procédé selon l'une des revendications précédentes 6 à 8, **caractérisé en ce qu'**une simple porteuse est un triangle isocèle comportant un sommet se trouvant à une valeur maximale (Max) et une base se trouvant à une valeur minimale (Min).

10. Procédé de pilotage d'un pont de puissance (1) selon l'une quelconque des revendications précédentes, *caractérisé en ce que* la détermination d'une modulante est effectuée selon une stratégie intersective.

11. Procédé de pilotage d'un pont de puissance (1) selon l'une quelconque des revendications 1 à 9, *caractérisé en ce que* la détermination d'une modulante est effectuée selon une stratégie barycentrique.

12. Procédé de pilotage d'un pont de puissance (1) selon l'une des revendications précédentes, *caractérisé en ce qu'*une méthode de production de fonctions de commutations comprend en outre une étape de bloquer un bras de pont pendant toute une période de découpage (Ts) du pont de puissance (1).

13. Procédé de pilotage d'un pont de puissance (1) selon l'une des revendications précédentes 3 à 12 exceptés les revendications 4 et 5, *caractérisé en ce que* le domaine du plan est défini dans un repère statorique, ledit repère statorique étant subdivisé en secteurs angulaires (SA) et **en ce qu'**une méthode de production de fonctions de commutations comporte en outre une étape de déterminer un bras de pont à bloquer dans un état haut ou un état bas en fonction de la position du vecteur tension de consigne ($\vec{V^*}$) dans un des secteurs angulaires (SA).

**14.** Procédé selon la revendication précédentes, **caractérisé en ce que** :

- si le vecteur tension de consigne ($\overrightarrow{V^*}$) est dans un premier secteur angulaire (SA1) alors le premier bras (B1) est bloqué à l'état haut,
- si le vecteur tension de consigne ($\overrightarrow{V^*}$) est dans un deuxième secteur angulaire (SA2) alors le troisième bras (B3) est bloqué à l'état bas,
- si le vecteur tension de consigne ($\overrightarrow{V^*}$) est dans un troisième secteur angulaire (SA3) alors le deuxième bras (B2) est bloqué à l'état haut,
- si le vecteur tension de consigne ($\overrightarrow{V^*}$) est dans un quatrième secteur angulaire (SA4) alors le premier bras (B1) est bloqué à l'état bas,
- si le vecteur tension de consigne ($\overrightarrow{V^*}$) est dans un cinquième secteur angulaire (SAS) alors le troisième bras (B3) est bloqué à l'état haut,
- si le vecteur tension de consigne ($\overrightarrow{V^*}$) est dans un sixième secteur angulaire (SA6) alors le deuxième bras (82) est bloqué à l'état bas.

**15.** Procédé de pilotage d'un pont de puissance (1) selon l'une des revendications précédentes 4 à 12, **caractérisé en ce que** la deuxième zone (H3) détermine des triangles intérieurs (Tli) et **en ce qu'**une méthode de production de fonctions de commutation comporte en outre une étape de déterminer un bras à bloquer dans un état haut ou un état bas en fonction de la position du vecteur tension de consigne dans un des triangles intérieurs (Tli).

**16.** Procédé de pilotage d'un pont de puissance (1) selon la revendication précédente, **caractérisé en ce que** :

- si le vecteur tension de consigne ($\overrightarrow{V^*}$) est dans un premier triangle intérieur (TI1) alors le premier bras (B1) est bloqué à l'état haut,
- si le vecteur tension de consigne ($\overrightarrow{V^*}$) est dans un deuxième triangle intérieur (T12) alors le troisième bras (B3) est bloqué à l'état bas,
- si le vecteur tension de consigne ($\overrightarrow{V^*}$) est dans un troisième triangle intérieur (TI3) alors le deuxième bras (B2) est bloqué à l'état haut,
- si le vecteur tension de consigne ($\overrightarrow{V^*}$) est dans un quatrième triangle intérieur (TI4) alors le premier bras (B1) est bloqué à l'état bas,
- si le vecteur tension de consigne ($\overrightarrow{V^*}$) est dans un cinquième triangle intérieur (TI5) alors le troisième bras (B3) est bloqué à l'état haut,
- si le vecteur tension de consigne ($\overrightarrow{V^*}$) est dans un sixième triangle intérieur (TI6) alors le deuxième bras (B2) est bloqué à l'état bas.

**17.** Procédé de pilotage d'un pont de puissance (1) selon l'une des revendications précédentes 4 **caractérisé en ce qu'**une méthode de production de fonctions de commutations comporte en outre une étape de sélectionner au moins deux bras de pont susceptibles d'être bloqués en fonction d'une relation d'ordre.

**18.** Procédé de pilotage d'un pont de puissance (1) selon la revendication précédente, **caractérisé en ce que** la relation d'ordre est une comparaison entre les modulantes (mod1, mod2, mod3) associées aux bras (B1, B2, B3) de pont.

**19.** Procédé de pilotage d'un pont de puissance (1) selon la revendication précédente, **caractérisé en ce que** les bras de pont sélectionnés correspondent aux bras de pont ayant la modulante la plus importante ($mod_M$) et la modulante la moins importante ($mod_m$).

**20.** Procédé de pilotage d'un pont de puissance (1) selon l'une des revendications précédentes 17 à 19, **caractérisé en ce que** le bras de pont à bloquer est choisi parmi les bras de pont sélectionnés et est celui qui comporte un courant de phase ($I_M$, $I_m$) le plus important en valeur absolue parmi des courants de phase correspondant respectivement à une plus grande des modulantes ($mod_M$) et une plus petite des modulantes ($mod_m$) parmi les modulantes (mod1, mode2, mod3) associées aux bras de pont (B1, B2, 83).

**21.** Procédé de pilotage d'un pont de puissance (1) selon la revendication précédente, **caractérisé en ce que** si le bras de pont à bloquer est celui correspondant à la plus grande des modulantes, alors le bras de pont est bloqué à l'état haut, et si le bras de pont à bloquer est celui correspondant à la plus petite des modulantes, alors le bras de pont est bloqué à l'état bas.

**22.** Procédé de pilotage d'un pont de puissance (1) selon l'une quelconque des revendications précédentes 1 à 21,

*caractérisé en ce* **qu'**une méthode de production de fonctions de commutations comporte en outre une étape de déterminer une quantité de neutre ($V_{no}$) à ajouter à une modulante en fonction d'un état haut ou bas d'un bras de pont à bloquer.

**23.** Procédé de pilotage d'un pont de puissance (1) selon la revendication précédente, *caractérisé en ce que* :

- si un bras (Bj) doit être bloqué à l'état haut alors la quantité de neutre ($V_{n0}$) est égale à une première valeur maximale (Max) moins la modulante associée audit bras ($V_{n0}$ = Max - mod$_j$), et
- si le bras (Bj) doit être bloqué à l'état bas alors la quantité de neutre ($v_{n0}$) est égale à une deuxième valeur minimale (Min) moins la modulante associée audit bras ($v_{n0}$ = Min - mod$_j$).

**24.** Dispositif de pilotage d'un pont de puissance (1) destiné à commander une charge électrique (3) comportant plusieurs phases, le pont de puissance (1) étant destiné à être relié à la charge électrique (3) via plusieurs bras (B1, ..., B3), au moins un par phase, et étant destiné à être piloté par des fonctions de commutations (SC1, SC2, SC3), lesdites fonctions de commutation déterminant des vecteurs de commande ($\vec{V}0$ ,..., $\vec{V}7$ ) pour commander la charge, lesdits vecteurs de commande ($\vec{V}0$ ,..., $\vec{V}7$ ) se subdivisant en vecteurs de commande de roue libre ($\vec{V}0$, $\vec{V}7$ ) et en vecteurs de commande actifs ($\vec{V}1$ ,..., $\vec{V}6$ ), ce dispositif comprenant des moyens agencés pour:

- Sélectionner une première méthode de production de fonctions de commutations qui produit un nombre réduit de combinaison de fonctions de commutation correspondant à des vecteurs de commande de roue libre ($\vec{V}0$ , $\vec{V}7$ ) ou une deuxième méthode de production de fonctions de commutations qui produit uniquement des combinaisons de fonctions de commutation correspondant à des vecteurs de commande actifs ($\vec{V}1$ ,..., $\vec{V}6$ ), lesdites méthodes étant définies en fonction d'un vecteur tension de consigne donné ($\vec{V}$* ) et comportant une étape de détermination d'une modulante (mod$_1$, mod$_2$, mod$_3$) associée à chaque bras du pont à partir de consignes de tension scalaires (V1*, V2*, V3*), et
- Appliquer ladite méthode sélectionnée pour produire une succession de vecteurs de commandes à partir des combinaisons de fonctions de commutations produites.

**caracterisé en ce que** ce dispositif comprend des moyens agencés pour:

- Comparer de modulantes translatées d'une quantité de neutre avec une porteuse, une modulante étant associée à chaque bras de pont,
- Définir des fonctions de commutation (SC) pour piloter ledit pont.

## Claims

**1.** Method for driving a power bridge (1) designed to control an electric load (3) comprising several phases, the power bridge (1) being designed to be connected to the electric load (3) via several arms (B1, ..., B3), at least one per phase, and being designed to be driven by switching functions (SC1, SC2, SC3), the said switching functions determining the control vectors ($\vec{V}0$, ..., $\vec{V}7$) for controlling the load, the said control vectors ($\vec{V}0$, ..., $\vec{V}7$) being subdivided into freewheel control vectors ($\vec{V}0$, $\vec{V}7$) and into active control vectors ($\vec{V}1$, ..., $\vec{V}6$), the method comprising the steps of:

- selecting a first method of production of switching functions which produces a reduced number of combinations of switching functions corresponding to freewheel control vectors ($\vec{V}0$, $\vec{V}7$) or a second method of production of switching functions which produces only combinations of switching functions corresponding to active control vectors ($\vec{V}1$, ..., $\vec{V}6$), the said methods being defined as a function of a given setpoint voltage vector ($\vec{V}$*) and comprising a step of determining a modulating element (mod$_1$, mod$_2$, mod$_3$) associated with each arm of the bridge on the basis of scalar voltage setpoints (V1*, V2*, V3*), and
- applying the said selected method in order to produce a succession of control vectors based on the combinations of switching functions produced, **characterized in that** a method for producing switching functions comprises a step of comparing modulating elements translated from a neutral quantity with a carrier, a modulating element being associated with each bridge arm, the said comparison defining switching functions (SC) in order to drive the said bridge.

**2.** Method for driving a power bridge (1) according to Claim 1, **characterized in that** the selection of a method for producing switching functions is based on a positioning of a setpoint voltage vector ($\vec{V}$*) in a zone (H) of a field of the plane defined by control vectors ($\vec{V}0$, ..., $\vec{V}7$), the setpoint voltage vector ($\vec{V}^*$) being determined on the basis of scalar voltage setpoints (V1*, V2*, V3*).

3.  Method for driving a power bridge (1) according to the preceding claim, **characterized in that** the field of the plane is divided into a first zone and a second zone (H1, H2) and **in that** the first method for producing switching functions is selected if the setpoint voltage vector ($\vec{V}^*$) is positioned in the first zone (H1), and **in that** the second method for producing switching functions is selected if the setpoint voltage vector ($\vec{V}^*$) is positioned in the second zone (H2).

4.  Method for driving a power bridge (1) according to Claim 2, **characterized in that** the field of the plane is divided into a first zone (H1), a second zone (H3) and a third zone (H4) and **in that** the first method for producing switching functions is selected if the setpoint voltage vector ($\vec{V}^*$) is positioned in the first zone (H1).

5.  Method for driving a power bridge (1) according to Claim 2 or 4, **characterized in that** the field of the plane is divided into a first zone (H1), a second zone (H3) and a third zone (H4) and **in that** the second method for producing switching functions is selected if the setpoint voltage vector ($\vec{V}^*$) is positioned in the second zone (H3) or third zone (H4).

6.  Method for driving a power bridge (1) according to any one of Claims 1 to 5, **characterized in that** the method for producing switching functions is the first method for producing switching functions and the carrier is a single carrier.

7.  Method for driving a power bridge (1) according to any one of Claims 1 to 5, **characterized in that** the method for producing switching functions is the second method for producing switching functions and the carrier is a double carrier.

8.  Method according to the preceding claim, **characterized in that** a double carrier comprises two single carriers (91, 92) and **in that** at least one modulating element is compared with only one of the carriers of the double carrier.

9.  Method according to one of preceding Claims 6 to 8, **characterized in that** a single carrier is an isosceles triangle comprising an apex that is at a maximum value (Max) and a base that is at a minimum value (Min).

10. Method for driving a power bridge (1) according to any one of the preceding claims, **characterized in that** the determination of a modulating element is made according to an intersective strategy.

11. Method for driving a power bridge (1) according to any one of Claims 1 to 9, **characterized in that** the determination of a modulating element is carried out according to a barycentric strategy.

12. Method for driving a power bridge (1) according to one of the preceding claims, **characterized in that** a method for producing switching functions also comprises a step of blocking a bridge arm during a whole chopping period (Ts) of the power bridge (1).

13. Method for driving a power bridge (1) according to one of preceding Claims 3 to 12 except Claims 4 and 5, **characterized in that** the field of the plane is defined in a stator-like coordinate system, the said stator-like coordinate system being subdivided into angular sectors (SA) and **in that** a method for producing switching functions also comprises a step of determining a bridge arm to be blocked in a high state or a low state as a function of the position of the setpoint voltage vector ($\vec{V}^*$) in one of the angular sectors (SA).

14. Method according to the preceding claim, **characterized in that**:

    - if the setpoint voltage vector ($\vec{V}^*$) is in a first angular sector (SA1), the first arm (B1) is blocked in the high state,
    - if the setpoint voltage vector ($\vec{V}^*$) is in a second angular sector (SA2), the third arm (B3) is blocked in the low state,
    - if the setpoint voltage vector ($\vec{V}^*$) is in a third angular sector (SA3), the second arm (B2) is blocked in the high state,
    - if the setpoint voltage vector ($\vec{V}^*$) is in a fourth angular sector (SA4), the first arm (B1) is blocked in the low state,
    - if the setpoint voltage vector ($\vec{V}^*$) is in a fifth angular sector (SA5), the third arm (B3) is blocked in the high state,
    - if the setpoint voltage vector ($\vec{V}^*$) is in a sixth angular sector (SA6), the second arm (B2) is blocked in the low state.

15. Method for driving a power bridge (1) according to one of preceding Claims 4 to 12, **characterized in that** the second zone (H3) determines internal triangles (Tli) and **in that** a method for producing switching functions also comprises a step of determining an arm to be blocked in a high state or a low state as a function of the position of the setpoint voltage vector in one of the internal triangles (Tli).

16. Method for driving a power bridge (1) according to the preceding claim, **characterized in that**:

   - if the setpoint voltage vector ($\vec{V}^*$) is in a first internal triangle (T11), the first arm (B1) is blocked in the high state,
   - if the setpoint voltage vector ($\vec{V}^*$) is in a second internal triangle (TI2), the third arm (B3) is blocked in the low state,
   - if the setpoint voltage vector ($\vec{V}^*$) is in a third internal triangle (T13), the second arm (B2) is blocked in the high state,
   - if the setpoint voltage vector ($\vec{V}^*$) is in a fourth internal triangle (T14), the first arm (B1) is blocked in the low state,
   - if the setpoint voltage vector ($\vec{V}^*$) is in a fifth internal triangle (T15), the third arm (B3) is blocked in the high state,
   - if the setpoint voltage vector ($\vec{V}^*$) is in a sixth internal triangle (T16), the second arm (B2) is blocked in the low state.

17. Method for driving a power bridge (1) according to one of preceding Claims 4 to 13, **characterized in that** a method for producing switching functions also comprises a step of selecting at least two bridge arms capable of being blocked as a function of a sequential relationship.

18. Method for driving a power bridge (1) according to the preceding claim, **characterized in that** the sequential relationship is a comparison between the modulating elements (mod1, mod2, mod3) associated with the bridge arms (B1, B2, B3).

19. Method for driving a power bridge (1) according to the preceding claim, **characterized in that** the selected bridge arms correspond to the bridge arms having the most significant modulating element ($\text{mod}_M$) and the least significant modulating element ($\text{mod}_m$).

20. Method for driving a power bridge (1) according to one of preceding Claims 17 to 19, **characterized in that** the bridge arm to be blocked is chosen from the selected bridge arms and is that which comprises a phase current ($I_M$, $I_m$) that is the most significant in absolute value from the phase currents corresponding respectively to one of the most significant of the modulating elements ($\text{mod}_m$) and one of the least significant of the modulating elements ($\text{mod}_m$) from amongst the modulating elements (mod1, mod2, mod3) associated with the bridge arms (B1, B2, B3).

21. Method for driving a power bridge (1) according to the preceding claim, **characterized in that**, if the bridge arm to be blocked is that corresponding to the most significant of the modulating elements, the bridge arm is blocked in the high state, and, if the bridge arm to be blocked is that corresponding to the least significant of the modulating elements, the bridge arm is blocked in the low state.

22. Method for driving a power bridge (1) according to any one of preceding Claims 1 to 21, **characterized in that** a method for producing switching functions also comprises a step of determining a neutral quantity ($V_{no}$) to be added to a modulating element as a function of a high or low state of a bridge arm to be blocked.

23. Method for driving a power bridge (1) according to the preceding claim, **characterized in that**:

   - if an arm (Bj) is to be blocked in the high state, the neutral quantity ($v_{n0}$) is equal to a first maximum value (Max) minus the modulating element associated with the said arm ($v_{n0}$ = Max - $\text{mod}_j$), and
   - if the arm (Bj) is to be blocked in the low state, the neutral quantity ($v_{n0}$) is equal to a second minimum value (Min) minus the modulating element associated with the said arm ($v_{n0}$ = Min - $\text{mod}_j$).

24. Device for driving a power bridge (1) designed to control an electric load (3) comprising several phases, the power bridge (1) being designed to be connected to the electric load (3) via several arms (B1, ..., B3), at least one per phase, and being designed to be driven by switching functions (SC1, SC2, SC3), the said switching functions determining the control vectors ($\vec{V}0$, ..., $\vec{V}7$) for controlling the load, the said control vectors ($\vec{V}0$, ..., $\vec{V}7$) being subdivided into freewheel control vectors ($\vec{V}0$, $\vec{V}7$) and into active control vectors ($\vec{V}1$, ..., $\vec{V}6$), this device comprising means arranged to:

   - select a first method of production of switching functions which produces a reduced number of combinations of switching functions corresponding to freewheel control vectors ($\vec{V}0$, $\vec{V}7$) or a second method of production of switching functions which produces only combinations of switching functions corresponding to active control

vectors ($\vec{V}1$, ..., $\vec{V}6$), the said methods being defined as a function of a given setpoint voltage vector ($v$*) and comprising a step of determining a modulating element ($mod_1$, $mod_2$, $mod_3$) associated with each arm of the bridge on the basis of scalar voltage setpoints (V1*, V2*, V3*), and
- apply said selected method in order to produce a succession of control vectors based on the combinations of switching functions produced, **characterized in that** this device comprises means arranged to:
- compare modulating elements translated from a neutral quantity with a carrier, one modulating element being associated with each bridge arm,
- define switching functions (SC) for driving the said bridge.

**Patentansprüche**

1. Verfahren zum Steuern einer Leistungsbrücke (1), die eine mehrere Phasen aufweisende elektrische Last (3) steuern soll, wobei die Leistungsbrücke (1) dazu bestimmt ist, mit der elektrischen Last (3) über mehrere Arme (B1, ..., B3), mindestens einen pro Phase, verbunden zu werden, und dazu bestimmt ist, von Schaltfunktionen (SC1, SC2, SC3) gesteuert zu werden, wobei die Schaltfunktionen Steuervektoren ($\vec{V}0$, ..., $\vec{V}7$) zum Steuern der Last bestimmen, wobei die Steuervektoren ($\vec{V}0$, ..., $\vec{V}7$) in Freilauf-Steuervektoren ($\vec{V}0$, $\vec{V}7$) und in aktive Steuervektoren ($\vec{V}1$, ..., $\vec{V}6$) unterteilt sind, wobei das Verfahren die Schritte aufweist:

   - eine erste Methode des Erzeugens von Schaltfunktionen, die eine reduzierte Anzahl von Kombinationen von Schaltfunktionen erzeugt, die Freilauf-Steuervektoren ($\vec{V}0$, $\vec{V}7$) entsprechen, oder eine zweite Methode des Erzeugens von Schaltfunktionen auszuwählen, die nur Kombinationen von Schaltfunktionen erzeugt, die aktiven Steuervektoren ($\vec{V}1$, ..., $\vec{V}6$) entsprechen, wobei die Methoden abhängig von einem gegebenen Sollspannungsvektor (V*) definiert werden und einen Schritt der Bestimmung einer jedem Arm der Brücke zugeordneten Modulierenden ($mod_1$, $mod_2$, $mod_3$) ausgehend von skalaren Spannungssollwerten (V1*, V2*, V3*) aufweisen, und
   - die ausgewählte Methode anzuwenden, um eine Folge von Steuervektoren ausgehend von den erzeugten Kombinationen von Schaltfunktionen zu erzeugen,

   **dadurch gekennzeichnet, dass** eine Methode zum Erzeugen von Schaltfunktionen einen Schritt des Vergleichs von um eine Nullmenge verlagerten Modulierenden mit einem Träger aufweist, wobei eine Modulierende jedem Brückenarm zugeordnet ist, wobei der Vergleich Schaltfunktionen (SC) zum Steuern der Brücke definiert.

2. Verfahren zum Steuern einer Leistungsbrücke (1) nach Anspruch 1, **dadurch gekennzeichnet, dass** die Auswahl einer Methode zum Erzeugen von Schaltfunktionen auf einer Positionierung eines Sollspannungsvektors ($\vec{V}$*) in einer Zone (H) eines Bereichs der Ebene beruht, die durch Steuervektoren ($\vec{V}0$, ..., $\vec{V}7$) definiert wird, wobei der Sollspannungsvektor ($\vec{V}$*) ausgehend von skalaren Spannungssollwerten (V1*, V2*, V3*) definiert wird.

3. Verfahren zum Steuern einer Leistungsbrücke (1) nach dem vorhergehenden Anspruch, **dadurch gekennzeichnet, dass** der Bereich der Ebene in eine erste und eine zweite Zone (H1, H2) aufgeteilt ist, und dass die erste Methode zum Erzeugen von Schaltfunktionen ausgewählt wird, wenn der Sollspannungsvektor ($\vec{V}$*) in der ersten Zone (H1) positioniert ist, und dass die zweite Methode zum Erzeugen von Schaltfunktionen ausgewählt wird, wenn der Sollspannungsvektor ($\vec{V}$*) in der zweiten Zone (H2) positioniert ist.

4. Verfahren zum Steuern einer Leistungsbrücke (1) nach Anspruch 2, **dadurch gekennzeichnet, dass** der Bereich der Ebene in eine erste (H1), eine zweite (H3) und eine dritte Zone (H4) aufgeteilt ist, und dass die erste Methode zum Erzeugen von Schaltfunktionen ausgewählt wird, wenn der Sollspannungsvektor ($\vec{V}$*) in der ersten Zone (H1) positioniert ist.

5. Verfahren zum Steuern einer Leistungsbrücke (1) nach Anspruch 2 oder 4, **dadurch gekennzeichnet, dass** der Bereich der Ebene in eine erste (H1), eine zweite (H3) und eine dritte Zone (H4) aufgeteilt ist, und dass die zweite Methode zum Erzeugen von Schaltfunktionen ausgewählt wird, wenn der Sollspannungsvektor ($\vec{V}$*) in der zweiten Zone (H3) oder der dritten Zone (H4) positioniert ist.

6. Verfahren zum Steuern einer Leistungsbrücke (1) nach einem der Ansprüche 1 bis 5, **dadurch gekennzeichnet, dass** die Methode zum Erzeugen von Schaltfunktionen die erste Methode zum Erzeugen von Schaltfunktionen und der Träger ein einfacher Träger ist.

7. Verfahren zum Steuern einer Leistungsbrücke (1) nach einem der Ansprüche 1 bis 5, **dadurch gekennzeichnet, dass** die Methode zum Erzeugen von Schaltfunktionen die zweite Methode zum Erzeugen von Schaltfunktionen und der Träger ein doppelter Träger ist.

8. Verfahren nach dem vorhergehenden Anspruch, **dadurch gekennzeichnet, dass** ein doppelter Träger zwei einfache Träger (91, 92) aufweist, und dass mindestens eine Modulierende mit einem einzigen der Träger des doppelten Trägers verglichen wird.

9. Verfahren nach einem der Ansprüche 6 bis 8, **dadurch gekennzeichnet, dass** ein einfacher Träger ein gleichschenkliges Dreieck ist, das eine Spitze, die sich auf einem maximalen Wert (Max) befindet, und eine Basis aufweist, die sich auf einem minimalen Wert (Min) befindet.

10. Verfahren zum Steuern einer Leistungsbrücke (1) nach einem der vorhergehenden Ansprüche, **dadurch gekennzeichnet, dass** die Bestimmung einer Modulierenden gemäß einer intersektierenden Strategie durchgeführt wird.

11. Verfahren zum Steuern einer Leistungsbrücke (1) nach einem der Ansprüche 1 bis 9, **dadurch gekennzeichnet, dass** die Bestimmung einer Modulierenden gemäß einer baryzentrischen Strategie durchgeführt wird.

12. Verfahren zum Steuern einer Leistungsbrücke (1) nach einem der vorhergehenden Ansprüche, **dadurch gekennzeichnet, dass** eine Methode zum Erzeugen von Schaltfunktionen außerdem einen Schritt des Blockierens eines Brückenarms während einer ganzen Taktperiode (Ts) der Leistungsbrücke (1) enthält.

13. Verfahren zum Steuern einer Leistungsbrücke (1) nach einem der vorhergehenden Ansprüche 3 bis 12, mit Ausnahme der Ansprüche 4 und 5, **dadurch gekennzeichnet, dass** der Bereich der Ebene in einem Stator-Bezugssystem definiert wird, wobei das Stator-Bezugssystem in Winkelsektoren (SA) unterteilt ist, und dass eine Methode zum Erzeugen von Schaltfunktionen außerdem einen Schritt des Bestimmens eines in einem hohen Zustand oder einem niedrigen Zustand zu blockierenden Brückenarms abhängig von der Stellung des Sollspannungsvektors ($\vec{V}^*$) in einem der Winkelsektoren (SA) aufweist.

14. Verfahren nach dem vorhergehenden Anspruch, **dadurch gekennzeichnet, dass**:

- wenn der Sollspannungsvektor ($\vec{V}^*$) in einem ersten Winkelsektor (SA1) ist, der erste Arm (B1) im hohen Zustand blockiert ist,
- wenn der Sollspannungsvektor ($\vec{V}^*$) in einem zweiten Winkelsektor (SA2) ist, der dritte Arm (B3) im niedrigen Zustand blockiert ist,
- wenn der Sollspannungsvektor ($\vec{V}^*$) in einem dritten Winkelsektor (SA3) ist, der zweite Arm (B2) im hohen Zustand blockiert ist,
- wenn der Sollspannungsvektor ($\vec{V}^*$) in einem vierten Winkelsektor (SA4) ist, der erste Arm (B1) im niedrigen Zustand blockiert ist,
- wenn der Sollspannungsvektor ($\vec{V}^*$) in einem fünften Winkelsektor (SA5) ist, der dritte Arm (B3) im hohen Zustand blockiert ist,
- wenn der Sollspannungsvektor ($\vec{V}^*$) in einem sechsten Winkelsektor (SA6) ist, der zweite Arm (B2) im niedrigen Zustand blockiert ist.

15. Verfahren zum Steuern einer Leistungsbrücke (1) nach einem der vorhergehenden Ansprüche 4 bis 12, **dadurch gekennzeichnet, dass** die zweite Zone (H3) innere Dreiecke (TIi) bestimmt, und dass eine Methode zum Erzeugen von Schaltfunktionen außerdem einen Schritt des Bestimmens eines in einem hohen oder niedrigen Zustand zu blockierenden Arms abhängig von der Stellung des Sollspannungsvektors in einem der inneren Dreiecke (TIi) aufweist.

16. Verfahren zum Steuern einer Leistungsbrücke (1) nach dem vorhergehenden Anspruch, **dadurch gekennzeichnet, dass**:

- wenn der Sollspannungsvektor ($\vec{V}^*$) in einem ersten inneren Dreieck (TI1) ist, der erste Arm (B1) im hohen Zustand blockiert ist,
- wenn der Sollspannungsvektor ($\vec{V}^*$) in einem zweiten inneren Dreieck (TI2) ist, der dritte Arm (B3) im niedrigen Zustand blockiert ist,
- wenn der Sollspannungsvektor ($\vec{V}^*$) in einem dritten inneren Dreieck (TI3) ist, der zweite Arm (B2) im hohen Zustand blockiert ist,

- wenn der Sollspannungsvektor ($\vec{V}^*$) in einem vierten inneren Dreieck (TI4) ist, der erste Arm (B1) im niedrigen Zustand blockiert ist,
- wenn der Sollspannungsvektor ($\vec{V}^*$) in einem fünften inneren Dreieck (TI5) ist, der dritte Arm (B3) im hohen Zustand blockiert ist,
- wenn der Sollspannungsvektor ($\vec{V}^*$) in einem sechsten inneren Dreieck (TI6) ist, der zweite Arm (B2) im niedrigen Zustand blockiert ist.

**17.** Verfahren zum Steuern einer Leistungsbrücke (1) nach einem der vorhergehenden Ansprüche 4 bis 13, **dadurch gekennzeichnet, dass** eine Methode zum Erzeugen von Schaltfunktionen außerdem einen Schritt des Auswählens von mindestens zwei Brückenarmen aufweist, die abhängig von einer Ordnungsbeziehung blockiert werden können.

**18.** Verfahren zum Steuern einer Leistungsbrücke (1) nach dem vorhergehenden Anspruch, **dadurch gekennzeichnet, dass** die Ordnungsbeziehung ein Vergleich zwischen den Modulierenden ($mod_1$, $mod_2$, $mod_3$) ist, die den Brückenarmen (B1, B2, B3) zugeordnet sind.

**19.** Verfahren zum Steuern einer Leistungsbrücke (1) nach dem vorhergehenden Anspruch, **dadurch gekennzeichnet, dass** die ausgewählten Brückenarme den Brückenarmen entsprechen, die die größte Modulierende ($mod_M$) und die kleinste Modulierende ($mod_m$) haben.

**20.** Verfahren zum Steuern einer Leistungsbrücke (1) nach einem der vorhergehenden Ansprüche 17 bis 19, **dadurch gekennzeichnet, dass** der zu blockierende Brückenarm unter den ausgewählten Brückenarmen gewählt wird und derjenige ist, der den größten Phasenstrom ($I_M$, $I_m$) im Absolutwert unter den Phasenströmen aufweist, die einer größten der Modulierenden ($mod_m$) bzw. einer kleinsten der Modulierenden ($mod_m$) unter den den Brückenarmen (B1, B2, B3) zugeordneten Modulierenden ($mod_1$, $mod_2$, $mod_3$) entsprechen.

**21.** Verfahren zum Steuern einer Leistungsbrücke (1) nach dem vorhergehenden Anspruch, **dadurch gekennzeichnet, dass**, wenn der zu blockierende Brückenarm derjenige ist, der der größten Modulierenden entspricht, der Brückenarm im hohen Zustand blockiert wird, und wenn der zu blockierende Brückenarm derjenige ist, der der kleinsten Modulierenden entspricht, der Brückenarm im niedrigen Zustand blockiert wird.

**22.** Verfahren zum Steuern einer Leistungsbrücke (1) nach einem der vorhergehenden Ansprüche 1 bis 21, **dadurch gekennzeichnet, dass** eine Methode zum Erzeugen von Schaltfunktionen außerdem einen Schritt aufweist, um eine Nullmenge ($V_{n0}$) zu bestimmen, die einer Modulierenden abhängig von einem hohen oder niedrigen Zustand eines zu blockierenden Brückenarms hinzuzufügen ist.

**23.** Verfahren zum Steuern einer Leistungsbrücke (1) nach dem vorhergehenden Anspruch, **dadurch gekennzeichnet, dass**:

- wenn ein Arm (Bj) im hohen Zustand blockiert werden soll, die Nullmenge ($V_{n0}$) gleich einem ersten maximalen Wert (Max) minus die dem Arm zugeordnete Modulierende ($V_{n0}$ = Max - $mod_j$) ist, und
- wenn der Arm (Bj) im niedrigen Zustand blockiert werden soll, die Nullmenge ($V_{n0}$) gleich einem zweiten minimalen Wert (Min) minus die dem Arm zugeordnete Modulierende ($V_{n0}$ = Min - $mod_j$) ist.

**24.** Vorrichtung zum Steuern einer Leistungsbrücke (1), die eine mehrere Phasen aufweisende elektrische Last (3) steuern soll, wobei die Leistungsbrücke (1) dazu bestimmt ist, mit der elektrischen Last (3) über mehrere Arme (B1, ..., B3), mindestens einen pro Phase, verbunden zu werden, und dazu bestimmt ist, von Schaltfunktionen (SC1, SC2, SC3) gesteuert zu werden, wobei die Schaltfunktionen Steuervektoren ($\vec{V}0$, ..., $\vec{V}7$) zum Steuern der Last bestimmen, wobei die Steuervektoren ($\vec{V}0$, ..., $\vec{V}7$) sich in Freilauf-Steuervektoren ($\vec{V}0$, $\vec{V}7$) und in aktive Steuervektoren ($\vec{V}1$, ..., $\vec{V}6$) unterteilen, wobei diese Vorrichtung Einrichtungen enthält, die eingerichtet sind, um:

- eine erste Methode des Erzeugens von Schaltfunktionen, die eine reduzierte Anzahl von Kombinationen von Schaltfunktionen erzeugt, die Freilauf-Steuervektoren ($\vec{V}0$, $\vec{V}7$) entsprechen, oder eine zweite Methode des Erzeugens von Schaltfunktionen auszuwählen, die nur Kombinationen von Schaltfunktionen erzeugt, die aktiven Steuervektoren ($\vec{V}1$, ..., $\vec{V}6$) entsprechen, wobei die Methoden abhängig von einem gegebenen Sollspannungsvektor ($\vec{V}^*$) definiert werden und einen Schritt der Bestimmung einer jedem Arm der Brücke zugeordneten Modulierenden ($mod_1$, $mod_2$, $mod_3$) ausgehend von skalaren Spannungssollwerten (V1*, V2*, V3*) aufweisen, und

- die ausgewählte Methode anzuwenden, um eine Folge von Steuervektoren ausgehend von den erzeugten Kombinationen von Schaltfunktionen zu erzeugen,

**dadurch gekennzeichnet, dass** diese Vorrichtung Einrichtungen enthält, die eingerichtet sind, um:

- um eine Nullmenge verlagerte Modulierende mit einem Träger zu vergleichen, wobei eine Modulierende jedem Brückenarm zugeordnet ist,
- Schaltfunktionen (SC) zum Steuern der Brücke zu definieren.

ACQUISITION — 12

CALCUL MODULANTES — 13

VECTEUR CONSIGNE — 14

POSITION VECTEUR — 15

QUANTITE NEUTRE — 16

COMPARAISON — 17

VECTEUR DE COMMANDE — 18

9

$\mu$P

8

4

11

CONSINGES

10

5        6        17

SOURCE DE TENSION CONTINUE:
-BATTERIE
-RESEAU REDRESSE
-ETC.

CABLAGE COTE CONTINU:
-LIGNE DE CONNEXION
-CONSOMMATEURS ELECTRIQUES
-ETC.

Idc

Udc

7

ONDULEUR POLYPHASE (B1,B2,B3)

3

1

2

## Fig. 1A

Fig. 1b

Fig. 3b

EP 1 964 257 B1

ACQUISITION OU CALCUL DES
CONSIGNES DE TENSION — 20

$V_1^*$  $V_2^*$  $V_3^*$

CALCUL DES MODULANTES — 21

$mod_1$  $mod_2$  $mod_3$

POSITION VECTORIELLE DE $\vec{\nu^*}$
DANS L'HEXAGONE — 22

30

DANS HEXAGONE INTERNE

DANS COURONNE
HEXAGONALE — 40

$V_{n0}$ IMPOSEE PAR POSITION VECTORIELLE DU VECTEUR $\vec{\nu^*}$ — 31
SI BLOCAGE DU BRAS j ETAT HAUT ALORS : $V_{n0} = 1-mod_j$
SI BLOCAGE DU BRAS j ETAT BAS ALORS : $V_{n0} = -1-mod_j$ — 41

$mod_1 = mod_1 + V_{n0}$ — 32
$mod_2 = mod_2 + V_{n0}$
$mod_3 = mod_3 + V_{n0}$ — 42

COMPARAISON MODULANTE-
TRIANGLE MONOPORTEUSE — 33

COMPARAISON MODULANTE-
TRIANGLE DOUBLE PORTEUSE — 43

ORDRE DE COMMANDE DES BRAS DE
PONT DE L'ONDULEUR — 34 / 44

**Fig. 2a**

32

**Fig. 2b**

**Fig. 2c**

ACQUISITION OU CALCUL DES CONSIGNES DE TENSION — 50

$V_1^*$   $V_2^*$   $V_3^*$

CALCUL DES MODULANTES — 51

$mod_1$   $mod_2$   $mod_3$

POSITION VECTORIELLE DE $\vec{\nu^*}$ DANS L'HEXAGONE — 52

60

DANS UN DES SIX TRIANGLES INTERIEURS

DANS HEXAGONE INTERNE

DANS UN DES SIX TRIANGLES EXTERIEURS — 80

70

$V_{n0}$ IMPOSEE PAR POSITION VECTORIELLE DU VECTEUR $\vec{\nu^*}$
SI BLOCAGE DU BRAS j
ETAT HAUT : $V_{n0} = 1 - mod_j$
SI BLOCAGE DU BRAS j
ETAT BAS : $V_{n0} = -1 - mod_j$

61

RELATION D'ORDRE ENTRE LES MODULANTES — 71 — 81

$mod_i$   $mod_M$

$mod_m$

72

$|I_m| \geq |I_M|$

82   NON   OUI

$V_{n0} = -1 - mod_m$    $V_{n0} = -1 - mod_M$ — 83
$mod_1 = mod_1 + V_{n0}$    $mod_1 = mod_1 + V_{n0}$
$mod_2 = mod_2 + V_{n0}$    $mod_2 = mod_2 + V_{n0}$
$mod_3 = mod_3 + V_{n0}$    $mod_3 = mod_3 + V_{n0}$ — 73

62

$mod_1 = mod_1 + V_{n0}$
$mod_2 = mod_2 + V_{n0}$
$mod_3 = mod_3 + V_{n0}$

74

63

COMPARAISON MODULANTE-TRIANGLE DOUBLE PORTEUSE

COMPARAISON MODULANTE-TRIANGLE MONO-PORTEUSE

COMPARAISON MODULANTE-TRIANGLE DOUBLE PORTEUSE — 84

64
75

ORDRE DE COMMANDE DES BRAS DE PONT DE L'ONDULEUR — 85

## Fig. 3A

$$V_{n0} = + (1 - mod_1)$$

Fig. 4

$$V_{n0} = + (1-mod_1)$$

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 0911950 A

### Littérature non-brevet citée dans la description

- **A.M. Hava ; R.J. Kerkman ; T.A. Lipo.** A high performance generalized discontinuous pwm algorithm. *IEEE Trans. on Industry Applications,* Septembre 1998, vol. 34 (5

- **Folker Renken.** Analytical Calculation of the DC-Link Capacitor Current for Pulsed Three-Phase Inverters. *Proceedings of E.P.E. Power Electronics and Motion Control,* 2004